# EUROPEAN PATENT APPLICATION

(11) **EP 4 635 705 A1**
(43) Date of publication of application: **22.10.2025**
(21) Application number: 23909485.7
(22) Date of filing: 17.10.2023
(51) Int. Cl.: B29B 17/02, B29B 17/04, B29B 17/00

(54) **COMPOSITE TREATMENT PROCESS AND COMPOSITE TREATMENT SYSTEM FOR WASTE PLASTIC BOTTLES**

(30) Priority: 30.12.2022 CN 202211719375
(71) Applicant: KINGFA SCI. & TECH. CO., LTD., Guangzhou, Guangdong 510663 (CN); Guangdong Zhengmao Intelligent Manufacturing Technology Co., Ltd., Guangdong 523463 (CN); Kingfa Environmental Sci.& Tech. Co., Ltd., Qingyuan, Guangdong 511545 (CN)
(72) Inventor: LI, Jianjun, Guangzhou, Guangdong 510663 (CN); LI, Dong, Guangzhou, Guangdong 510663 (CN); MA, Pengtao, Guangzhou, Guangdong 510663 (CN); CHEN, Pingxu, Guangzhou, Guangdong 510663 (CN); YE, Nanbiao, Guangzhou, Guangdong 510663 (CN); LI, Cong, Guangzhou, Guangdong 510663 (CN); QI, Wenliang, Guangzhou, Guangdong 510663 (CN); PENG, Zhi, Guangzhou, Guangdong 510663 (CN); LIU, Siyang, Guangzhou, Guangdong 510663 (CN); LIU, Xintao, Guangzhou, Guangdong 510663 (CN); ZHANG, Wenlong, Guangzhou, Guangdong 510663 (CN); DENG, Yuanqing, Guangzhou, Guangdong 510663 (CN); RAO, Xiang, Guangzhou, Guangdong 510663 (CN)
(74) Representative: Canzler & Bergmeier Patentanwälte Partnerschaft mbB
(86) International application number: PCT/CN2023/124857
(87) International publication number: WO 2024/139551

(57) **Abstract**

The present invention relates to the technical field of waste plastic recycling, and in particular to a composite treatment process and composite treatment system for waste plastic bottles. The composite treatment process comprises the steps of conveying waste plastic bottles and adjusting same to be upright, drafting, feeding, slitting, screening waste and plastic strips, cleaning the plastic strips and preliminarily removing water from the plastic strips, and dewatering and drying the plastic strips. According to the present invention, by means of the physical properties of cut products of bottle caps, bottle collars, and bottle bodies, the cut products of the bottle caps and the bottle collars are separated out to obtain bottle body plastic strips, so that the step of removing label stickiness by heating and boiling and the step of removing cap impurities by floating and filtering are omitted, thereby reducing energy consumption and reducing wastewater. Compared with the prior art that crushing is performed to obtain plastic sheets and then material screening is performed on the plastic sheets, causing high sorting difficulty and low sorting precision due to the small size of the plastic sheets, the present invention can achieve obtaining of bottle body plastic strips having higher purity, thereby facilitating broadening the application range of recycled plastics.

## Description

### TECHNICAL FIELD

The present invention relates to the technical field of recycling of waste plastics, and in particular, to a composite treatment process and a composite treatment system for waste plastic bottles.

### BACKGROUND

At present, most beverage bottles on the market are plastic bottles. The plastic bottles are mainly made of polyethylene or polypropylene with a variety of organic solvents. Polyester (PET), polyethylene (PE) and polypropylene (PP) are widely used as raw materials of the plastic bottles. After these raw materials are added with corresponding organic solvents, they are heated at high temperature and shaped into plastic containers via plastic molds using blow molding, extrusion blow molding or injection molding techniques. The plastic bottles are not easily broken and are made of food-grade raw materials, with low cost and high transparency. The bottle bodies, bottle caps and bottle collars of waste plastic bottles are made of different materials. Therefore, in a plastic bottle recycling process, in order to improve the purity of the plastic bottles, not only labels, glue and beverage residues are removed, but also the bottle caps and bottle necks are separated.

For example, China patent CN104647637A discloses a recycling method for plastic bottles and a recycling production line therefor, and the recycling method includes the following steps: sorting the plastic bottles; performing shear crushing on the sorted plastic bottles to obtain plastic bottle sheets; heating and boiling the plastic bottle sheets to remove the stickiness of labels and residual liquids; removing cap impurities by floating and filtering the boiled plastic bottle sheets with saline-alkali water; performing horizontal spiral stirring on the plastic bottle sheets for which the cap impurities are removed, so that black spots on the plastic bottle sheets are removed through sieve pore grinding washing; performing upward spiral stirring on the plastic bottle sheets for which the black spots are removed and blowing air upward from two sides thereof to remove labels from the plastic bottle sheets; and performing upward spiral stir-frying on the label-removed plastic bottle sheets and heat drying them by blowing air from the bottom thereof. In the above solution, after the sorted plastic bottles are crushed into block-shaped plastic sheets, they are cleaned, separated, identified and sorted to identify and sort the bottle bodies, bottle caps and bottle collars made of different materials. This recycling method not only has high energy consumption, generates much wastewater and brings in many chemicals, but also has low separation purity and high cost, and involves in other unidentified garbage fragments, which limits the use of the recycled bottle body fragments.

### SUMMARY

The present invention aims to overcome disadvantages in the prior art, and provide a composite treatment process and a composite treatment system for waste plastic bottles, featuring low energy consumption, reduced wastewater and high-purity separated bottle body plastic strips, thus broadening the recycling use of bottle body materials.

A technical solution adopted by the present invention to solve the above problem is that
a composite treatment process for waste plastic bottles is provided.

The composite treatment process for waste plastic bottles includes the following steps:
S10. providing the waste plastic bottles; conveying the waste plastic bottles through a first conveying mechanism; adjusting an axial direction of the waste plastic bottles to a first direction, where the first direction is substantially the same as a conveying direction of the first conveying mechanism; and identifying and sorting the direction-adjusted waste plastic bottles to obtain target waste plastic bottles;
S20. conveying the target waste plastic bottles to a stretching device; and performing first flattening and stretching on bottle bodies of the target waste plastic bottles through a stretching gap of the stretching device;
S30. conveying the stretched and flattened target waste plastic bottles to a feeding roller assembly, where a periphery of the feeding roller assembly is provided with a plurality of concave holes through which bottle caps pass; performing second flattening on the bottle bodies of the target waste plastic bottles by a feeding gap of the feeding roller assembly; allowing the bottle caps of the target waste plastic bottles to pass through the concave holes of the feeding roller assembly; conveying the target waste plastic bottles to a slitting device by the feeding roller assembly for slitting; and slitting the bottle bodies of the waste plastic bottles into plastic strips and the remaining parts of the waste plastic bottles into waste materials, where the length dimension of the plastic strip is greater than the width dimension of the waste material in any direction, and/or the weight of the plastic strip is greater than the weight of the waste material; and the feeding gap is smaller than the stretching gap;
S40. conveying the plastic strips and the waste materials obtained in Step S30 to a screening device, and removing the waste materials by the screening device to obtain the plastic strips;
S50. conveying the plastic strips obtained through screening in Step S40 to a cleaning device for cleaning; and
S60. conveying the plastic strips cleaned in Step S50 to a drying device for drying to obtain bottle body plastic strips.
the first direction being substantially the same as the conveying direction of the first conveying mechanism means that an included angle between the axis of the waste plastic bottles and the straight line where the conveying direction of the first conveying mechanism 100 is located is 0°-45°.

According to the composite treatment process for waste plastic bottles of the present invention, in Step S10, the positions of the waste plastic bottles are adjusted, where the axial direction of the waste plastic bottles is adjusted to be substantially the same as the conveying direction of the first conveying mechanism, that is, the waste plastic bottles are adjusted to the first direction to provide conditions for subsequent slitting along the axial direction of the waste plastic bottles, and in Step S10, the waste plastic bottles are identified and sorted to obtain the target waste plastic bottles, so that the purity of the recovered products can be improved; in Step S20, the target waste plastic bottles arranged along the first direction enter the stretching device, and the waste plastic bottles deformed caused by folding are unfolded and first flattened under the stretching action of the stretching gap of the stretching device. In addition, under the action of the friction force generated by the contact between the bottle body and the stretching device, the label paper on the surfaces of the bottle bodies is pre-removed, and the dirt on the inner and outer surfaces of the waste plastic bottles is also loosened to a specific extent; in Step S30, a feeding gap smaller than the stretching gap is used to second flatten the bottle bodies of the waste plastic bottles are second flattened through the feeding gap that is smaller than the stretching gap, providing conditions for slitting strips; the target waste plastic bottles enter the slitting device, and the slitting device slits the bottle bodies into the plastic strips, and the remaining parts of the waste plastic bottles are slit into waste materials; in Step S40, the screening device screens out the waste materials by using the different physical properties of the plastic strips and the waste materials, thus obtaining the plastic strips; in Step S50, the plastic strips enter the cleaning device for cleaning; and in step S60, the cleaned plastic strips are dried to obtain clean and dry bottle body plastic strips. According to the composite treatment process of the present invention, the bottle bodies are slit into the plastic strips, so that a size difference between the slit products of the bottle bodies and the slit products of the remaining parts of the target waste plastic bottles is increased, and the waste materials slit by the remaining parts of the waste plastic bottles can be conveniently separated by the physical properties thereof to obtain the bottle body plastic strips. In such a way, a step of removing label stickiness by heating and boiling and a step of removing cap impurities by floating and filtering are omitted, reducing energy consumption and wastewater. Compared with the prior art that crushing is performed to obtain plastic sheets and then material screening is performed on the plastic sheets, causing high sorting difficulty and low sorting precision due to the small size of the plastic sheets, the present invention can achieve obtaining of high-purity bottle body plastic strips, thereby facilitating broadening the application range of recycled plastics.

Preferably, the stretching device includes two sets of stretching rollers; and in Step S20, the performing first flattening and stretching on bottle bodies of the target waste plastic bottles through a stretching gap of the stretching device includes:
controlling the two sets of stretching rollers in the stretching device to contact two opposite sides of the target waste plastic bottles respectively to generate a first friction force and a second friction force respectively; and
controlling the first friction force and the second friction force to be unequal in magnitude, so that the two sets of stretching rollers perform first flattening and stretching on the bottle bodies of the target waste plastic bottles.

The first friction force and the second friction force may be in the same direction or in different directions; and the first friction force and the second friction force are unequal in magnitude, that is, either the first friction force is greater than the second friction force or the second friction force is greater than the first friction force.

Preferably, in Step S30, the slitting the bottle bodies of the waste plastic bottles into plastic strips and the remaining parts of the waste plastic bottles into waste materials by a slitting device includes:
slitting the bottle bodies of the waste plastic bottles into the plastic strips;
slitting the bottle caps of the waste plastic bottles to obtain a first plastic block;
slitting the bottle collars of the waste plastic bottles to obtain a second plastic block; and
shearing the label paper to obtain label fragments;
where the length dimension of the plastic strip is greater than the width dimension of the first plastic block in any direction and the width dimension of the second plastic block in any direction, and the weights of the plastic strip, the first plastic block and the second plastic block are respectively greater than the weight of the label fragments.

In the present invention, the slit product of the bottle body is denoted as a plastic strip, the slit product of the bottle cap is denoted as a first plastic block, the slit product of the bottle collar is denoted as a second plastic block, and the slit product of the label paper is denoted as a label fragment. The plastic strip is a strip with at least two opposite sides kept parallel, where a length dimension of the strip is obviously larger than a width dimension thereof; when the strip is slit along the axial direction of the bottle body, the length of the obtained plastic strip is equivalent to the height of the bottle body, and the width of the plastic strip is generally set to 2cm-3cm; the thickness of the first plastic block and the second plastic block is greater than that of the plastic strip, and the dimensions of the first plastic block and the second plastic block in any direction are less than the length of the plastic strip, to be specific, the maximum dimension of the first plastic block is not greater than the diameter of the bottle cap, and the maximum dimension of the second plastic block is not greater than the diameter of the bottle collar. When the strip is slit along the axial direction of the bottle body and the width of the plastic strip is 2cm-3cm, the bottle cap is split in two in the diameter direction or the direction parallel to the diameter to obtain the first plastic block. The bottle collar is split in two in the diameter direction or the direction parallel to the diameter to obtain the second plastic block. The thickness of the label fragments is less than that of the plastic strip, the first plastic block and the second plastic block, generally less than 0.5mm, and the mass of the label fragments is less than that of the plastic strip, the first plastic block and the second plastic block. The label fragments may be of a regular sheet structure or an irregular sheet structure.

Preferably, Step S40 is conducted in the following steps:
conveying the plastic strip, the first plastic block, the second plastic block and the label fragments by a second conveying mechanism, and adjusting an axial direction of the plastic strip to a second direction in a conveying process, and allowing the plastic strip, the first plastic block, the second plastic block and the label fragments to be conveyed to the screening device along the second direction, where the second direction is substantially the same as the conveying direction of the second conveying mechanism;
sorting, by the screening device, the first plastic block and the second plastic block by falling and the label fragments by upward suction to obtain the plastic strip; and allowing the plastic strip to be conveyed out of the screening device along the second direction; and
in Step S50, conveying the plastic strip to the cleaning device along the second direction.
the second direction being substantially the same as the conveying direction of the second conveying mechanism means that an included angle between the axis of the plastic strips and the straight line where the conveying direction of the second conveying mechanism is located is 0°-45°;
The present invention further includes a composite treatment system for waste plastic bottles, and the composite treatment system includes a feeding device, a first conveying mechanism, a stretching device, a feeding roller assembly, a slitting device, a screening device, a cleaning device and a drying device;
the feeding device is located above a starting end of the first conveying mechanism, and the first conveying mechanism includes a plurality of conveying units arranged in parallel; the width dimension of each conveying unit is greater than the width dimension of the waste plastic bottle and smaller than the height dimension of the waste plastic bottle; the stretching device is located below a tail end of the first conveying mechanism;
the stretching device includes stretching roller assemblies rotating in opposite directions, and each of the stretching roller assemblies is provided with a stretching gap for allowing the target waste plastic bottle to pass through and stretching and flattening the target waste plastic bottle;
the feeding roller assembly is located below the stretching device and includes a driving roller and a driven roller that rotate in opposite directions, where a minimum distance between the driving roller and the driven roller is a feeding gap, and the feeding gap is smaller than the stretching gap; peripheral surfaces of the driving roller and the driven roller are both provided with concave holes which are capable of accommodating bottle caps and bottle necks; in a feeding process, the bottle caps and the bottle necks of the waste plastic bottles are located in the concave holes, and the bottle bodies are flattened again through the feeding gap;
the slitting device is located below the feeding roller assembly and includes several sets of cutter assemblies which are capable of rotating in opposite directions to generate a shearing force; the bottle bodies of the target waste plastic bottles are slit into the plastic strips by means of the shearing force, and the bottle caps, the bottle collars and the label paper are also chopped to obtain waste materials;
the screening device includes a first vibrating plate, a starting end of the first vibrating plate is located below the slitting device, an output port of the first vibrating plate is communicated to an input end of the cleaning device, and a bottom of the first vibrating plate is provided with a hollowed-out structure that allows some waste materials to fall, and a top thereof is provided with an exhaust device for suction and sorting of some waste materials; and
plastic strips at an output end of the cleaning device enter the drying device for dewatering and drying.

According to the composite treatment system for waste plastic bottles of the present invention, the waste plastic bottles are fed into the first conveying mechanism via the feeding device for conveying. The width dimensions of each conveying unit are designed to allow the waste plastic bottles to pass through only in a longitudinal direction or an inclined direction, thereby adjusting the orientations of the waste plastic bottles. This enables all plastic bottles to be approximately arranged longitudinally, providing conditions for subsequent slitting along the axial direction of the waste plastic bottles. The waste plastic bottles arranged longitudinally enter the stretching device, and the waste plastic bottles deformed caused by folding are unfolded and flattened under the stretching action of the stretching gap of the stretching device. In addition, under the friction force generated by the contact between the bottle body and the stretching device, the label paper on the surfaces of the bottle bodies is pre-removed, and the dirt on the inner surfaces and the outer surfaces of the waste plastic bottles is also loosened to a specific extent. The waste plastic bottle bodies are further flattened through the feeding gap that is smaller than the stretching gap, providing the g conditions for slitting strips. The peripheral surfaces of the driving roller and the driven roller are both provided with the concave holes which are capable of accommodating the bottle caps and bottle necks, preventing the different materials of the bottle caps, the bottle collars, and the bottle bodies from affecting the extrusion effect on the bottle bodies. Because the waste plastic bottles enter the slitting device longitudinally, and the slitting device performs slitting along the axial direction of the waste plastic bottles, the bottle bodies are slit into the plastic strips, the parts of the waste plastic bottles other than the bottle bodies are slit to obtain waste materials. The first vibrating plate uses different physical properties of the waste plastic strips to separate the waste materials, thus obtaining the plastic strips; the plastic strips are cleaned by the cleaning device and then dewatered to obtain clean and dry plastic strips. According to the composite treatment system of the present invention, the waste materials are separated to obtain bottle body plastic strips according to a difference in physical properties between the plastic strips obtained by cutting the bottle bodies and the waste materials obtained by cutting the remaining parts of the waste plastic bottles except for the bottle bodies, so that a step of removing label stickiness by heating and boiling and a step of removing cap impurities by floating and filtering are omitted, reducing energy consumption and wastewater. Compared with the prior art that crushing is performed to obtain plastic sheets and then material screening is performed on the plastic sheets, causing high sorting difficulty and low sorting precision due to the small size of the plastic sheets, the present invention can achieve obtaining of high-purity bottle body plastic strips, thereby facilitating broadening the application range of recycled plastics.

Compared with the prior art, the beneficial effects of the present invention are that:

According to the composite treatment process and composite treatment system of the present invention, the waste materials are separated to obtain bottle body plastic strips according to a difference in physical properties between the plastic strips and the waste materials obtained by slitting the remaining parts of the waste plastic bottles, so that a step of removing label stickiness by heating and boiling and a step of removing cap impurities by floating and filtering are omitted, reducing energy consumption and wastewater. Compared with the prior art that crushing is performed to obtain plastic sheets and then material screening is performed on the plastic sheets, causing high sorting difficulty and low sorting precision due to the small size of the plastic sheets, the present invention can achieve obtaining of high-purity bottle body plastic strips, thereby facilitating broadening the application range of recycled plastics.

### BRIEF DESCRIPTION OF DRAWINGS

FIG. 1 is a schematic diagram showing steps of a composite treatment process for waste plastic bottles in Embodiment 1;
FIG. 2 is a schematic diagram showing steps of a composite treatment process for waste plastic bottles in Embodiment 3;
FIG. 3 is a schematic diagram showing steps of a composite treatment process for waste plastic bottles in Embodiment 4;
FIG. 4 is a schematic structural diagram of a first conveying mechanism;
FIG. 5 is a schematic structural diagram of a first conveying mechanism from another angle;
FIG. 6 is a schematic structural diagram of a stretching device, a feeding roller assembly and a slitting device;
FIG. 7 is a schematic structural diagram of a rotary blade roller in a slitting device;
FIG. 8 is a schematic structural diagram of an elastic retaining wheel in a slitting device;
FIG. 9 is a schematic structural diagram of a stationary blade plate in a slitting device;
FIG. 10 is a schematic structural diagram of a screening device;
FIG. 11 is a schematic structural diagram of a screening device from another angle;
FIG. 12 is a schematic structural diagram of a cleaning device;
FIG. 13 is a schematic structural diagram of a cleaning frame passing between a first impact assembly and a second impact assembly;
FIG. 14 is a schematic structural diagram of a cleaning frame, a first impact column and a second impact column;
FIG. 15 is a schematic structural diagram of a drying device; and
FIG. 16 is a schematic structural diagram of a third conveying mechanism.

In the accompanying drawings: 100. first conveying mechanism; 110. conveying unit; 120. first eccentric wheel; 130. second eccentric wheel; 140. metal detector; 150. visual detector; 160. sliding plate blanking assembly; 200. stretching device; 210. stretching gap; 220. first driving stretching roller; 230. second driving stretching roller; 240. first driven stretching roller; 250. second driven stretching roller; 260. notch; 270. feeding hopper; 300. feeding roller assembly; 310. driving roller; 320. driven roller; 330. feeding gap; 340. concave hole; 350. blanking hopper; 400. slitting device; 410. rotary blade roller ; 411. cutting disc; 420. stationary blade plate; 421. first grid; 422. second grid; 423. arc-shaped supporting base; 430. elastic retaining wheel; 500. screening device; 510. second conveying mechanism; 511. conveying unit; 512. third eccentric wheel; 513. fourth eccentric wheel; 520. first vibrating plate; 521. first vibrating screen; 522.second vibrating screen; 530. air blowing device; 540. exhaust device; 600. cleaning device; 610. conveying assembly; 611. conveying chain; 612. cleaning frame; 630. cleaning assembly; 631.rough washing tank; 632. first composite washing tank; 633. second composite washing tank; 634. washing tank; 635. clean water tank; 640. dripping assembly; 641. water-containing plate; 650. first impact assembly; 651. first driving element; 652. first mounting plate; 653. first impact column; 660. second impact assembly; 661. second driving element; 662. second mounting plate; 663. second impact column; 670. abrasive supply device; 671. power unit; 672. water inlet pipe; 673. water outlet pipe; 680. water circulation device; 681. membrane filter; 682. water inlet; 683. clear liquid outlet; 684. turbid liquid outlet; 700. drying device; 710. centrifugal driving mechanism; 720. inner screen; 730. outer shell; 740. lifting cylinder; 750. water draining port; 760. discharge port; 800. partition plate; 810. first partition part; 820. second partition part; 900. third conveying mechanism; 910.near infrared detector; and 920. sliding plate mechanism.

### DETAILED DESCRIPTION OF EMBODIMENTS

The present invention will be further described with reference to specific embodiments. The accompanying drawings are only intended for exemplary explanation, represent schematic diagrams rather than physical images, and cannot be understood as a limitation to this patent. In order to better illustrate the embodiments of the present invention, some parts in the accompanying drawings are omitted, enlarged or narrowed, which do not represent the size of the actual product. For those skilled in the art, it is understandable that some well-known structures and their descriptions in the accompanying drawings may be omitted.

The same or similar reference symbols in the accompanying drawings of the embodiments of the present invention correspond to the same or similar parts. In the descriptions of the present invention, it should be understood that if the azimuth or positional relationship indicated by terms such as "up", "down", "left" and "right" is based on the azimuth or positional relationship shown in the accompanying drawings, it is only for the convenience of describing the present invention and simplifying the descriptions, and it does not indicate or imply that the device or element referred to must have a specific azimuth, be constructed and operated in the specific azimuth, so the terms describing the positional relationship in the accompanying drawings are only intended for exemplary explanation and cannot be understood as a limitation to this patent. For those skilled in the art, the specific meanings of the above terms can be understood according to specific conditions.

### Embodiment 1

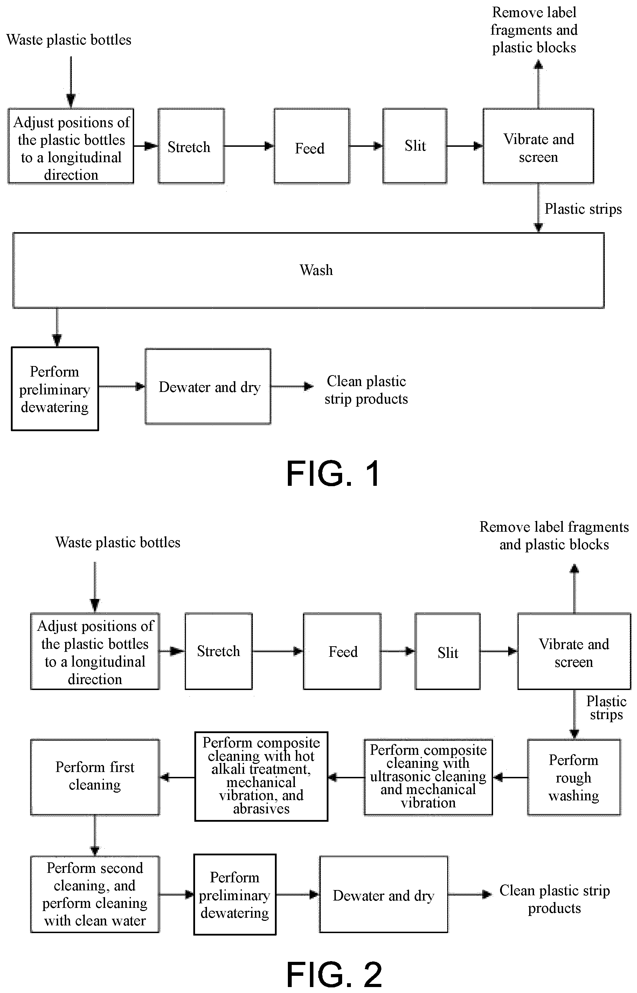

The embodiment is a first embodiment of a composite treatment process for waste plastic bottles, as shown in FIG. 1. The composite treatment process includes the following steps:
S10. providing the waste plastic bottles; conveying the waste plastic bottles through a first conveying mechanism 100; adjusting an axial direction of the waste plastic bottles to a first direction, where the first direction is substantially the same as a conveying direction of the first conveying mechanism 100; and identifying and sorting the direction-adjusted waste plastic bottles to obtain target waste plastic bottles, where the first direction being substantially the same as the conveying direction of the first conveying mechanism means that an included angle between the axis of the waste plastic bottles and the straight line where the conveying direction of the first conveying mechanism 100 is located is 0°-45°;
S20. conveying the target waste plastic bottles to a stretching device 200; and performing first flattening and stretching on bottle bodies of the target waste plastic bottles through a stretching gap 210 of the stretching device 200;
S30. conveying the stretched and flattened target waste plastic bottles to a feeding roller assembly 300, where a periphery of the feeding roller assembly 300 is provided with a plurality of concave holes 340 through which bottle caps pass; performing second flattening on the bottle bodies of the target waste plastic bottles by a feeding gap 330 of the feeding roller assembly 300; allowing the bottle caps of the target waste plastic bottles to pass through the concave holes 340 of the feeding roller assembly 300; conveying the target waste plastic bottles to a slitting device 400 by the feeding roller assembly 300 for slitting; and slitting the bottle bodies of the waste plastic bottles into plastic strips and the remaining parts of the waste plastic bottles into waste materials, where the length dimension of the plastic strip is greater than the width dimension of the waste material in any direction, and/or the weight of the plastic strip is greater than the weight of the waste material; and the feeding gap 330 is smaller than the stretching gap 210;
S40. conveying the plastic strips and the waste materials obtained in Step S30 to a screening device 500, and removing the waste materials by the screening device 500 to obtain the plastic strips;
S50. conveying the plastic strips obtained through screening in Step S40 to a cleaning device 600 for cleaning; and
S60. conveying the plastic strips cleaned in Step S50 to a drying device 700 for drying to obtain bottle body plastic strips.

In Step S10, the direction of waste plastic bottles can be adjusted by, but is not limited to, the following specific ways: the first conveying mechanism 100 is provided with a plurality of conveying units 110 arranged in parallel, and the width dimension of each conveying unit 110 is greater than the width dimension of the waste plastic bottle and smaller than the height dimension of the waste plastic bottle; two of the conveying units 110 form a conveying unit group, and a first eccentric wheel 120 is arranged between the adjacent conveying unit groups; a second eccentric wheel 130 is arranged between the two conveying units 110 of each conveying unit group; the width of each conveying unit group is greater than twice the width of the waste plastic bottle and smaller than the height of the waste plastic bottle; and the second eccentric wheel 130 is located behind the first eccentric wheel 120 along a conveying direction. When the waste plastic bottles are conveyed, a driving motor can be used to drive the first eccentric wheel 120 and the second eccentric wheel 130 to rotate. The target waste plastic bottles being conveyed in along first direction can provide conditions for subsequent slitting thereof along the axial direction of the waste plastic bottles.

If the metal-containing objects are not removed, metallic substances will have a serious impact on subsequent processing equipment. Because the shapes of the waste plastic bottles and labels in daily life are different, and material compositions of different brands of plastic bottles are slightly different, stretching, feeding, and slitting are difficult to be performed on different shapes of plastic bottles by using the same equipment.

Thus, in Step S10 of the embodiment, the identifying and sorting the direction-adjusted waste plastic bottles to obtain the target waste plastic bottles includes a first identification step, a second identification step, and a sorting step:
the first identification step: performing metal detection on the waste plastic bottles to obtain metal-containing objects and plastic objects;
the second identification step: identifying external labels and appearance features of the plastic objects to obtain the target waste plastic bottles and non-target waste plastic bottles; and
the sorting step: sorting and removing the metal-containing objects and the non-target waste plastic bottles to obtain the target waste plastic bottles.

It should be noted that in the embodiment, except for the removal of non-target waste plastic bottles and metal-containing objects, if the raw materials of the waste plastic bottles contain small-sized objects with dimensions smaller than the heights of the waste plastic bottles along the conveying direction, such objects can also be removed in this step.

When the metallic substances are detected, an alarm is given to remind workers to remove the metallic substances, and the removal of the metallic substance or the metal-containing objects can also be controlled. In addition, in the embodiment, magnetic metals can also be removed through attraction before metal detection to reduce the content of the metals at a metal detection point, thereby reducing a quantity of alarms caused by the metal substances.

In the embodiment, the external labels and appearance features of the plastic objects are identified, the non-target waste plastic bottles are removed, while only target waste plastic bottles of which labels and shapes are consistent are retained for a next step. This is conductive to smoothly processing the waste plastic bottles, to obtain high-purity recycled materials.

It should be noted that in the embodiment, the target plastic bottles and the non-target plastic bottles can be screened manually before being fed, or can be subjected to machine screening by using a visual detector 150 when being conveyed by the first conveying mechanism 100. In the embodiment, the screening methods for the target plastic bottles and the non-target plastic bottles, in addition to machine screening by the visual detector 150, can be other automatic identification methods that can automatically identify for machine screening.

In Step S20, in the stretching and flattening process, waste plastic bottles deformed caused by folding are unfolded and flattened under the stretching action of the stretching gap 210 of the stretching device 200. In addition, under the friction force generated by the contact between the bottle body and the stretching device 200, the label paper on the surfaces of the bottle bodies is pre-removed, and dirt on inner surfaces and outer surfaces of the waste plastic bottles is also loosened to a specific extent. The target waste plastic bottles are conveyed to the feeding roller assembly 300 when being stretched and flattened. In the embodiment, the direction indicated by the term "longitudinal" generally means the direction in which the axis of the waste plastic bottle is vertical. Of course, this is merely a limitation made to enable the target waste plastic bottle on the first conveying mechanism 100 to fall to the stretching device 200 under its own gravity along the first direction, and it does not constitute a limitation to the present invention.

In step S30, in order to increase the difference in physical properties between the slit products of the bottle bodies and the slit products of the remaining parts of the waste plastic bottles as much as possible, the waste plastic bottles in the embodiment are slit along the axial direction of the target waste plastic bottles to obtain plastic strips with a length substantially equal to the height of the waste plastic bottles. In order to slit the target waste plastic bottles into the plastic strips along the axial direction of the target waste plastic bottles by the slitting device 400, the stretched and flattened target waste plastic bottles in the embodiment are conveyed to the feeding roller assembly 300 along the axial direction of the target waste plastic bottles, and then conveyed to the slitting device 400 along the axial direction of the target waste plastic bottles by the feeding roller assembly 300 for slitting, so that the plastic strips with a length consistent with the height of the bottle bodies of the target waste plastic bottles can be obtained; and the axial direction of the target waste plastic bottles can be consistent with the vertical direction.

When the target waste plastic bottles enter the slitting device 400 along the axial direction thereof for slitting, the slitting device 400 not only slits the bottle bodies into the plastic strips, but also slits the bottle caps, bottle collars and label paper along the axis of the target waste plastic bottles, and slits the bottle bodies of the waste plastic bottles into the plastic strips. The bottle caps of the waste plastic bottles are slit into a first plastic block; the bottle collars of the waste plastic bottles are slit into a second plastic block; the label paper is sheared into label fragments; where the length dimension of the plastic strip is greater than the width dimension of the first plastic block in any direction and the width dimension of the second plastic block in any direction, and the weights of the plastic strip, the first plastic block and the second plastic block are respectively greater than the weight of the label fragments. After slitting, slit products of the bottle caps and the bottle collars are separated from the body bodies of the target waste plastic bottles. For the convenience of description, in the embodiment, the slit product of bottle cap is denoted as the first plastic block, the slit product of the bottle collar is denoted as the second plastic block, and the slit product of label paper denoted as the label fragment. Of course, it should be noted that the descriptions of the first plastic block, the second plastic block and the label fragment are merely defined to facilitate distinguishing the slit products of different parts of the target waste plastic bottles, and does not constitute a limitation to the dimension or shape of the slit products of all parts of the waste plastic bottles.

In order to sort the plastic strips, the first plastic block, the second plastic block and the label fragment, Step S40 of the embodiment is conducted in the following steps:
conveying the plastic strip, the first plastic block, the second plastic block and the label fragments by a second conveying mechanism 510, and adjusting an axial direction of the plastic strip to a second direction in a conveying process, and allowing the plastic strip, the first plastic block, the second plastic block and the label fragments to be conveyed to the screening device 500 along the second direction, where the second direction is substantially the same as the conveying direction of the second conveying mechanism 510;
sorting, by the screening device 500, the first plastic block and the second plastic block by falling and the label fragments by upward suction to obtain the plastic strip; and allowing the plastic strip to be conveyed out of the screening device 500 along the second direction; and
in Step S50, conveying the plastic strip to the cleaning device 600 along the second direction.

When the slit products of the waste plastic bottles include the plastic strips, the first plastic block, the second plastic block and the label fragments, in the screening device 500, the first plastic block and the second plastic block can be screened in a falling process the dimensions thereof are much smaller than the length of the plastic strips, and the first plastic block and the second plastic block obtained through screening can be collected as required, and the label fragments can be screened by upward suction due to the light weight thereof, and the label fragments obtained through screening can also be s collected as required, and the plastic strips enter Step S50. The first plastic block and the second plastic block can be screened out by using the different shapes of the plastic strips, the first plastic block and the second plastic block, and the label fragments can be separated based on the property that the mass of the label fragments is significantly lower than the mass of the plastic strips, the first plastic block, and the second plastic block. Physical separation is realized based on the physical property between the plastics instead of boiling and flotation, thereby reducing the amount of wastewater generated and greatly saving the energy consumption. In addition, in the embodiment, in order to realize that the plastic strips enter the cleaning device 600 in a consistent direction, in Step S40 of the embodiment, the plastic strips, the first plastic block, the second plastic block and the label fragments fall to the second conveying mechanism 510 and then are conveyed to the screening device 500 by the second conveying mechanism 510, the positions of the plastic strips are adjusted in the conveying process, and the axial direction of the plastic strips is adjusted to the second direction. The second direction is substantially the same as the conveying direction of the second conveying mechanism 510, where the second direction being substantially the same as the conveying direction of the second conveying mechanism means that an included angle between the axis of the plastic strips and the straight line where the conveying direction of the second conveying mechanism 510 is located is 0°-45°; and when the included angle is 0°, the axial direction of the plastic strips is consistent with an advancing direction of the plastic strips, and in this case, the plastic strips are most easily conveyed into the cleaning device in a regular manner. In the embodiment, the second conveying mechanism is preferred to realize that the plastic strips enter the cleaning device 600 in a consistent direction to obtain a better cleaning effect, and does not constitute a limitation to the present invention. In addition, the method for adjusting the direction of the plastic strips in the embodiment can make reference to the above-mentioned method for adjusting the direction of the waste plastic bottles.

The composite treatment process of the present invention includes: in Step S10, adjusting the conveying direction of the waste plastic bottles to prepare for subsequent stretching, flattening and slitting, and sorting the target waste plastic bottles to improve the purity thereof; in Step S20, unfolding and flattening the waste plastic bottles deformed by folding, and pre-removing the label paper on the surfaces of the bottle bodies and loosening dirt on the inner and outer surfaces of the waste plastic bottles; in Step S30, slitting the bottle bodies of the target waste plastic bottles to obtain the plastic strips, and slitting the remaining parts of the target waste plastic bottles to obtain the waste materials; in Step S40, screening the waste materials to obtain high-purity plastic strips; in Step S50, cleaning the plastic strips; after the cleaning step, to avoid the subsequent wet screening and make a whole treatment process simple and reliable, preliminarily dewatering the plastic strips in a draining form; and in Step S60, drying the plastic strips to obtain bottle body plastic strips. The obtained bottle body plastic strips are dry and clean plastic strip products, which can be directly conveyed to granulation equipment and molding equipment for molding, or can be packaged in a packaging process. The packaged plastic strips can be transported to a molding workshop or directly packaged for sale.

According to the composite treatment process of the present invention, the bottle bodies are slit into the plastic strips, so that a size difference between the slit products of the bottle bodies and the slit products of the remaining parts of the target waste plastic bottles is increased, the waste materials obtained by slitting the remaining parts of the waste plastic bottles can be conveniently separated by the physical properties thereof to obtain the bottle body plastic strips, and bottle caps, bottle collars, labels and the like are separated by the physical properties of the slit products of bottle caps, bottle collars, labels and bottle bodies to obtain the bottle body plastic strips In such a way, a step of removing label stickiness by heating and boiling and a step of removing cap impurities by floating and filtering are omitted, reducing energy consumption and wastewater. Compared with the prior art that crushing is performed to obtain plastic sheets and then material screening is performed on the plastic sheets, causing high sorting difficulty and low sorting precision due to the small size of the plastic sheets, the present invention can achieve obtaining of high-purity bottle body plastic strips, thereby facilitating broadening the application range of recycled plastics.

### Embodiment 2

The embodiment is a second embodiment of a composite treatment process for waste plastic bottles. The embodiment is similar to Embodiment 1, but a difference between Embodiment 2 and Embodiment 1 lies in that:
The stretching device 200 includes two sets of stretching rollers; and in Step S20, the performing first flattening and stretching on bottle bodies of the target waste plastic bottles through a stretching gap 210 of the stretching device 200 includes:
controlling the two sets of stretching rollers in the stretching device 200 to contact two opposite sides of the target waste plastic bottles respectively to generate a first friction force and a second friction force respectively; and
controlling the first friction force and the second friction force to be unequal in magnitude, so that the two sets of stretching rollers perform first flattening and stretching on the bottle bodies of the target waste plastic bottles.

In the embodiment, when the target waste plastic bottle passes through the stretching gap 210, the first friction force and the second friction force between the stretching device 200 and the two opposite sides of the target waste plastic bottles are unequal. In this case, because friction forces on outer surfaces of the two opposite sides of the target waste plastic bottle are unequal, a label on the outer surface can be effectively removed, dirt on the outer surface can be effectively loosened, and the inner surfaces on the two opposite sides of the target waste plastic bottle can move relatively under the action of the large friction force and the small friction force. Therefore, the dirt on the inner surface of the target waste plastic bottle can be loosened.

In the embodiment, different sizes of friction forces may be applied on the two opposite sides of the target waste plastic bottle by setting a structure of the stretching device 200. For example, the stretching device 200 in the embodiment may include two stretching rollers, where a rotation speed of one stretching roller is greater than a rotation speed of the other stretching roller, and the two stretching rollers contact and rub the two opposite sides of the target waste plastic bottle respectively. When the target waste plastic bottle passes through the stretching gap 210 between the two stretching rollers, a friction force of a stretching roller with a fast speed on a surface of the waste plastic bottle is large, and a friction force of a stretching roller with a slow speed on the surface of the waste plastic bottle is small. For another example, the stretching device 200 in the embodiment includes two stretching rollers, where surface roughness of one stretching roller is greater than surface roughness of the other stretching roller, and the two stretching rollers contact and rub the two opposite sides of the target waste plastic bottle respectively. When the target waste plastic bottle passes through a stretching gap 210 between the two stretching rollers with different roughness, a friction force of a stretching roller with large roughness on the surface of the waste plastic bottle is large, and a friction force of a stretching roller with small roughness on the surface of the waste plastic bottle is small.

In addition, it should be noted that two sets of stretching rollers may further be arranged in the embodiment. One set of stretching rollers include the two stretching rollers with unequal rotation speeds or the two stretching rollers with different roughness in the foregoing description. Specifically, the two sets of stretching rollers may include draft rollers with unequal rotation speeds, stretching rollers with different roughness, or a combination of the draft rollers with unequal rotation speeds and the stretching rollers with unequal roughness. The stretching rollers with high speeds and/or the stretching rollers with large roughness respectively contact and rub the two opposite sides of the target discarded plastic bottle, to generate two contacts and frictions of which directions are opposite, thereby better achieving effect of stretching and flattening, pre-removing the label, and loosening the dirt.

After step S20 and before step S30, target waste plastic bottles that are stretched and flattened are first guided and conveyed to the two sides of the feeding roller assembly 300, and then move from the two sides to a center under an action of the feeding roller assembly 300. If the target waste plastic bottle enters the feeding roller assembly 300 with a cap facing down, the target waste plastic bottle is fed by the feeding roller assembly 300 in a pulling manner. If the target waste plastic bottle enters the feeding roller assembly 300 with a bottom facing downward, the target waste plastic bottle is fed by the feeding roller assembly 300 in a rubbing and pushing manner. In the embodiment, the target waste plastic bottles that are stretched and flattened are diverted and conveyed from two sides and then achieve two sides of the feeding roller assembly 300, and the two sides of the feeding roller assembly 300 are places at which a pressure of the feeding roller assembly 300 is minimized. The target waste plastic bottles converge at a feeding gap 330. The stretching gap 210 and the feeding gap 330 are both narrow gaps, preventing the target waste plastic bottles that are stretched and flattened from accumulating above the feeding roller assembly 300, so that the feeding effect and the feeding efficiency are not affected. A discharging hopper of the feeding roller assembly 300 is a place at which the pressure of the feeding roller assembly 300 is the greatest. When a rear target waste plastic bottle extrudes a front target waste plastic bottle, the target waste plastic bottle is forced to enter and pass through the slitting device 400 under an action of the pressure, where the front and the rear are relative to a moving direction of the target waste plastic bottle.

In step S30, when the slitting device 400 may implement slitting by means of a shearing force formed between a rotary blade edge and a stationary blade edge in a staggered manner. The rotary blade edge and the stationary blade edge each may be a cutting edge of a stationary blade and a cutting edge of a rotary blade respectively, and the stationary blade and the rotary blade rotate relative to each other at a same speed to implement slitting. The rotary blade edge and the stationary blade edge are made of cemented carbide, and a small gap is maintained between the rotary blade edge and the stationary blade edge, to ensure the cutting effect, the cutting efficiency and a long grinding cycle of a blade tooth. In the embodiment, a quantity of rotary blades and a gap between the rotary blades may be designed based on width dimensions of plastic strips.

In addition, in step S30, when the slitting device 400 performs slitting, elastic retaining wheels 430 and a rotary blade roller 410 may be provided and rotate oppositely at a same rotation speed. The target waste plastic bottle passes between a stationary blade plate 420 and the rotary blade roller 410. In addition, the elastic retaining wheels 430 elastically abut with bodies of the target waste plastic bottles. There are a plurality of elastic retaining wheels 430, and multi-point abutting is formed between the plurality of elastic retaining wheels 430 and the bodies of the target waste plastic bottles. A shearing force is formed between the rotary blade edge of the rotary blade roller 410 and the stationary blade edge of the stationary blade plate 420 in a staggered manner. The target waste plastic bottles are sheared by means of the shearing force. The bottle bodies of the target waste plastic bottle are slit into the plastic strips, bottle caps and bottle collars are slit into a first plastic block and a second plastic block, and label paper is sheared into label fragments. The elastic retaining wheels 430 each apply a specific pressure on the bottle body under an elastic force. Under the pressure, the target waste plastic bottle does not sway from side to side when being slit. In addition, the pressure is applied on the bottle body, to generate a friction force. Under an action of the friction force, several elastic retaining wheels 430 and the rotary blade roller 410 rotate oppositely, to drive the target waste plastic bottle to slide downward uniformly. That is, due to the pressure of the elastic retaining wheels 430, the target waste plastic bottle may slide downward uniformly, vertically, and stably. This avoids shaking, multi-slitting, or stagnation of slitting caused by the rotary blade edge of the rotary blade roller 410.

In the embodiment, peripheries of the stretching device 200, the feeding roller assembly 300, and the slitting device 400 may share one housing, to protect the devices inside the housing. A shape of the housing may be designed based on a shape of the stretching device 200, a shape of the feeding roller assembly 300, and a shape of the slitting device 400, to implement a compact structure and a beautiful appearance.

### Embodiment 3

The embodiment is a third embodiment of a composite treatment process for waste plastic bottles. As shown in FIG. 2, the embodiment is similar to Embodiment 1 or Embodiment 2, but a difference between Embodiment 3 and Embodiment 1 or Embodiment 2 lies in that:
After the step of cleaning the plastic strips, Step S50 further includes performing preliminary drying on the plastic strips. Specifically, a path for transferring the plastic strips from step S40 to step S60 includes a first path and a second path that are set sequentially. The plastic strips are cleaned sequentially multiple times when moving along the first path; and moisture on surfaces of the plastic strips fall down and is separated in a form of a water droplet when moving along the second path. The first path and the second path are spatially divided into an upper layer and a lower layer, and the second path is located above the first path, to save space required for the device.

When moving along the first path, the plastic strips are cleaned as follows: performing first cleaning on the plastic strips by immersing the plastic strips in a cleaning solution, to remove floating dust and floating oil on the surfaces of the plastic strips, performing second cleaning on the plastic strips by using a cleaning mode combining ultrasonic cleaning and mechanical vibration cleaning, to loosen and strip dirt on the surfaces of the plastic strips, performing third cleaning on the plastic strips by using a combination mode of hot alkali treatment, abrasive circulation and mechanical vibration, to rub and chemically clean the surfaces of the plastic strips, thereby removing stubborn dirt and ink, and performing fourth cleaning on the plastic strips with the cleaning solution or clean water, to reduce the chemical content on the surfaces of the plastic strips and separate the abrasive entrapped in the plastic strip. To further reduce chemical residues and abrasive residues on the surfaces of the plastic strips, cleaning with clean water may be performed once or multiple times after the fourth cleaning in the embodiment.

Specifically, an example in which cleaning with clean water is performed once after the fourth cleaning is used for description. The cleaning step specifically includes the following steps.
1. Perform rough washing first. A cleaning solution for rough washing may be turbid liquid filtered out from the cleaning solution used in the remaining four steps, to save water resources and reduce energy consumption. Before the cleaning solution coming from the remaining four steps is discharged to a sewage water treatment plant, the surfaces of the plastic strips may be immersed to remove the floating dust and floating oil. Rough washing may be immersion cleaning at a room temperature.
2. Loosen and strip the dirt on the surfaces of the plastic strips by using the cleaning mode combining ultrasonic cleaning and mechanical vibration cleaning. In this cleaning step, a temperature of the cleaning solution may be 45°-55°. Due to actions of an ultrasonic wave and mechanical vibration, part of the dirt can be loosened and stripped, to implement the removal of dirt that is easier to clean. Ultrasonic cleaning and mechanical vibration cleaning are two different cleaning methods. Ultrasonic cleaning is mainly used to disperse, emulsify, and strip a dirt layer by means of direct or indirect cavitation, acceleration, and acoustic streaming of the ultrasonic wave on liquid, thereby achieving a purpose of cleaning. Mechanical vibration cleaning is mainly to loosen the dirt by means of impacting or kneading generated between a mechanical device and a to-be-cleaned object, thereby achieving the purpose of cleaning.
3. Rub and chemically clean the surfaces of the plastic strips by using a combination mode of hot alkali treatment, abrasive circulation and mechanical vibration, to remove stubborn dirt and ink. In this cleaning step, the cleaning solution may be alkali liquor of which temperature is 65°-75°. Under the matching of the abrasive and mechanical vibration and the synergistic effect of the hot alkali, the surfaces of the plastic strips can be rubbed and chemically cleaned intensively, to remove the stubborn dirt and ink.
4. Wash the plastic strips, to reduce the chemical content on the surfaces of the plastic strips and separate the abrasive entrapped in the plastic strip cleaning solution. In this cleaning step, the temperature of the cleaning solution may be the room temperature.
5. Wash the plastic strips with clean water, to further reduce the chemical residues and abrasive residues on the surfaces of the plastic strips, specifically, to enable the alkali/chemical residues on the surfaces of the plastic strips to meet the requirements, without visible abrasive residues.

In the process in which plastic products are cleaned sequentially, the floating dust and floating oil on the surfaces of the plastic strips are removed by rough washing, the dirt that is easier to clean is removed by using the cleaning mode combining ultrasonic cleaning and mechanical vibration cleaning, the stubborn dirt and ink are removed by using the combination mode of hot alkali treatment, abrasive circulation and mechanical vibration, and the surfaces of the plastic strips are cleaned twice to enable the alkali/chemical residues on the surfaces of the plastic strips to meet the requirements, without visible abrasive residues, thereby obtaining bottle body plastic strips. In the embodiment, a stepwise water replenishment method is used for water replenishment. Water in step 1 to Step 5 is replenished from a clean water tank 635 in Step 5, and wastewater in step 1 to Step 5 is discharged from a rough washing tank 631 in step 1, waste liquid generated during washing in Step 2 and Step 3 is filtered through a ceramic membrane to obtain clear liquid, the clear liquid may be reused as the cleaning solution in Step 2 and Step 3, and turbid liquid obtained by filtering may flow back to step 1 and used as the cleaning solution in Step 1, to reduce the discharge of the wastewater, thereby implementing the effect of energy saving and emission reduction.

### Embodiment 4

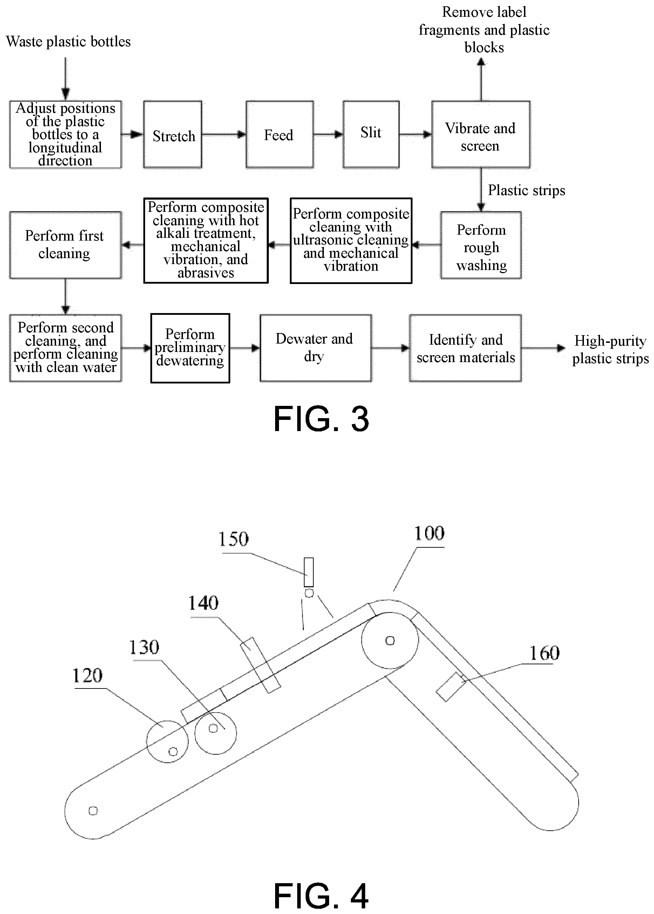

the embodiment is similar to any of Embodiment 1 to Embodiment 3, but a difference between Embodiment 4 and any of Embodiment 1 to Embodiment 3 lies in that: because the plastic strips may be transparent plastic strips that are made of different materials and that have a same appearance, for example, PET plastic strips that may be mixed with transparent PMMA, PC, and other plastic strips. Although the content of such impurities is low, such impurities have a significant impact on the quality of PET. Therefore, in the embodiment, after step S60, the process further includes a step of conveying and screening bottle body plastic strips. This step includes: conveying the bottle body plastic strips to a packaging process via a third conveying mechanism 900. In the process in which the bottle body plastic strips are conveyed via the third conveying mechanism 900, material identification is performed on the bottle body plastic strips, to obtain target plastic strips and non-target plastic strips. The target plastic strips enter the packaging process, and the non-target plastic strips are screened and collected. The material identification may be performed using a near infrared detector, as shown in FIG. 3. In the embodiment, high-purity bottle body plastic strips can be obtained. Due to the higher purity, the economic value is high.

### Embodiment 5

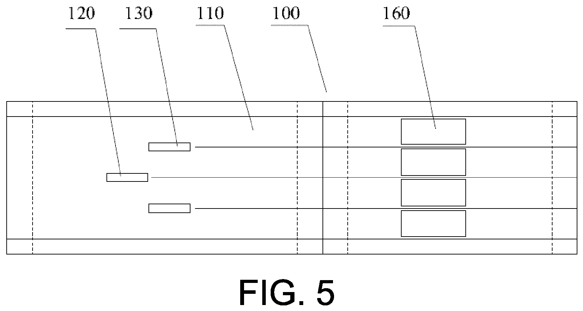

The embodiment is a first embodiment of the composite treatment system for waste plastic bottles. The composite treatment system for waste plastic bottles includes a feeding device, a first conveying mechanism 100, a stretching device 200, a feeding roller assembly 300, a slitting device 400, a screening device 500, a cleaning device 600 and a drying device 700;
the feeding device is located above a starting end of the first conveying mechanism 100, and the first conveying mechanism 100 includes a plurality of conveying units 110 arranged in parallel; the width dimension of each conveying unit 110 is greater than the width dimension of the waste plastic bottle and smaller than the height dimension of the waste plastic bottle; the stretching device 200 is located below a tail end of the first conveying mechanism 100; two of the conveying units form a conveying unit group, and a first eccentric wheel 120 is arranged between the adjacent conveying unit groups; a second eccentric wheel 130 is arranged between the two conveying units 110 of each conveying unit group; the width of each conveying unit group is greater than twice the width of the waste plastic bottles and less than the height of the waste plastic bottles; and the second eccentric wheel 130 is located behind the first eccentric wheel 120 along a conveying direction, as shown in FIG. 4 and FIG. 5. In the embodiment, the first eccentric wheel 120 and the second eccentric wheel 130 may each be connected to a drive motor. During the conveyance of the waste plastic bottles, the drive motor drives the first eccentric wheel 120 and the second eccentric wheel 130 to rotate.

On the first conveying mechanism 100, waste plastic bottles that are arranged disorderly need to be adjusted to the first direction. In the embodiment, the first direction is substantially the same as a conveying direction of the first conveying mechanism 100. Waste plastic bottles that are arranged in the first direction may be conveyed with either bottle caps facing forward or bottle bottoms facing forward. When the waste plastic bottles are fed into the first conveying mechanism 100, each conveying unit group allows a maximum of two vertically arranged waste plastic bottles to pass through and does not allow horizontally arranged waste plastic bottles to pass through. Under an action of the first eccentric wheel 120, shapes and orientations of the waste plastic bottles are adjusted to be horizontal or inclined. A width of each conveying unit 110 is equal to half a width of the conveying unit group. Waste plastic bottles that are adjusted by the second eccentric wheel 130 may be generally conveyed in a longitudinal forward direction.

If metallic substances are not removed from the waste plastic bottles, subsequent processing equipment may be affected severely. Therefore, in the embodiment, a metal detector 140 is disposed above each conveying unit 110, as shown in FIG. 4. When detecting the metallic substances, the metal detector 140 sends an alarm, to alert the staff to remove the metallic substances, or sends a signal to a controller, to enable the controller to control the screening and removal of the metallic substances. To reduce a quantity of alarms caused by the metal substances, in the embodiment, a magnetic rack may be disposed before the metal detector, to attract and remove magnetic metals, thereby reducing the content of the metals at a metal detection point.

Because the shapes of the waste plastic bottles and labels in daily life are different, and material compositions of different brands of plastic bottles are slightly different, stretching, feeding, and slitting are difficult to perform on different shapes of plastic bottles by using the same equipment. Therefore, in the embodiment, a visual detector 150 is disposed above each conveying unit 110, to identify the shapes of the waste plastic bottles and the labels, thereby obtaining the target plastic bottles and the non-target plastic bottles. The non-target plastic bottles may include plastic bottles and some small-sized materials, as shown in FIG. 4. After identification, the non-target discarded plastic bottles are removed, while only target waste plastic bottles of which labels and shapes are consistent are retained for a next step. This is conductive to smoothly processing the waste plastic bottles, to obtain higher-purity recycled materials.

The non-target plastic bottles are removed via a sliding plate blanking assembly 160. The first conveying mechanism 100 includes a first conveying belt and a first slide. The first conveying belt is inclined upward. The metal detector 140 and the visual detector 150 are both disposed above the first conveying belt. The first slide is inclined downward, and the waste plastic bottles are first fed to the first conveying belt, later are conveyed to the first slide by the first conveying belt, and then slide in the first slide. A plurality of blanking ports that are arranged uniformly on a surface of the first slide. The sliding plate blanking assembly 160 includes sliding plates of which shapes are matched with shapes of the blanking ports, and a drive mechanism that is mounted on a back surface of the first slide. The drive mechanism drives the sliding plates to stretch or retract, or drives the sliding plates to rise or low, thereby opening or closing the blanking ports. When the metal object, the small-sized object, or the non-target waste plastic bottles are detected, the controller calculates and determines positions of the metal object, the small-sized object, or the non-target waste plastic bottle on the first slide, and controls sliding plates located below corresponding positions to move, to open the blanking ports, thereby removing the metal object, the small-sized object, or the non-target waste plastic bottles. Certainly, in addition to the sliding plate blanking mechanism, other devices such as a robotic arm may also be controlled by the controller to grasp and remove the metal object, the small-sized object, or the non-target discarded plastic bottles.

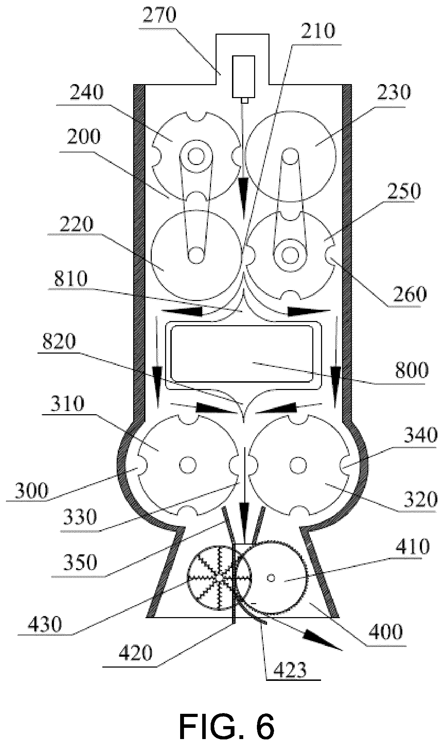

In the embodiment, the stretching device 200 may be located directly below a tail end of the first conveying mechanism 100. The target waste plastic bottles on the first conveying mechanism 100 fall, with the bottle caps facing downward or the bottle bottoms facing downward, into the stretching device 200 under the action of their own gravity. In the embodiment, the stretching device 200 includes stretching roller assemblies rotating in opposite directions, and each of the stretching roller assemblies is provided with a stretching gap 210 for allowing the target waste plastic bottle to pass through and stretching and flattening the target waste plastic bottle. The stretching gap 210 of the stretching device 200 stretches and flattens the target waste plastic bottles, and pre-removes label paper from the surfaces of the waste plastic bottles, to loosen the dirt on the surfaces of the waste plastic bottles through a friction force. In the stretching and flattening process, waste plastic bottles that are arranged longitudinally enter the stretching device 200, and waste plastic bottles deformed caused by folding are unfolded and flattened under the stretching action of the stretching gap 210 of the stretching device 200. In addition, under the friction force generated by the contact between the bottle body and the stretching device 200, the label paper on the surfaces of the bottle bodies is pre-removed, and dirt on inner surfaces and outer surfaces of the waste plastic bottles is also loosened to a specific extent.
the feeding roller assembly 300 is located below the stretching device 200 and includes a driving roller 310 and a driven roller 320 that rotate in opposite directions, where a minimum distance between the driving roller 310 and the driven roller 320 is a feeding gap 330, and the feeding gap 330 is smaller than the stretching gap 210; peripheral surfaces of the driving roller 310 and the driven roller 320 are both provided with concave holes 340 that are capable of accommodating bottle caps and bottle necks; in a feeding process, the bottle caps and the bottle necks of the waste plastic bottles are located in the concave holes 340, and the bottle bodies are flattened again through the feeding gap 330, as shown in FIG. 6. Hardness of the bottle cap is significantly larger than hardness of the bottle body. The feeding roller assembly 300 is difficult to extrude the bottle cap and bottle body to a same thickness. The feeding roller assembly 300 with the concave holes 340 has good flattening effect on the bottle body, and can avoid a jam caused when hard caps do not pass through. In the embodiment, when the drive roller 310 and the driven roller 320 rotate oppositely, positions of the concave holes 340 located on the peripheral surfaces of the drive roller 310 and the driven roller 320 are in a one-to-one correspondence. When the concave holes 340 at two corresponding positions are opposite to each other, a gap between the two concave holes 340 is larger than a size of the bottle cap, and a length of an arc surface between the two adjacent concave holes 340 on the drive roller 310 and the driven roller 320 is nearly equal to a height of the plastic bottle body, enabling the bottle cap to smoothly pass through the feeding gap 330. In addition, spacing between roller surfaces between the concave holes 340 may further ensure extrusion effect on the bottle body, to avoid interference between the waste plastic bottles, thereby minimizing the jam. Furthermore, elongation and flattening effect on the bottle body are excellent, and the working efficiency of the equipment is high.

The slitting device 400 is located below the feeding roller assembly 300 and includes several sets of cutter assemblies that are capable of rotating in opposite directions to generate a shearing force. The cutter assembly may include a stationary blade and a rotary blade, or may include a stationary blade plate and a rotary blade plate. The target waste plastic bottles are cut through the shearing force. In the embodiment, the slitting device 400 may be located directly below the feeding roller assembly 300. The cutter assemblies slit, along an axial direction of the target waste plastic bottles, the bottle bodies into plastic strips of which lengths are approximately equal to the height of the target waste plastic bottle. The width of the plastic strip is generally 2cm-3cm. While the bottle bodies are slit, the bottle caps, the bottle collars, and the label paper are slit along the axial direction of the target waste plastic bottles. After slitting, slit products of the bottle caps and the bottle collars are separated from the body bodies of the target waste plastic bottles. In the embodiment, the slit product of the bottle cap is denoted as a first plastic block, the slit product of the bottle collar is denoted as a second plastic block, and the slit product of the label paper is denoted as a label fragment. When the target waste plastic bottles that are stretched and flattened are slit along the axial direction of the target waste plastic bottles, dimensions of the first plastic block and the second plastic block in any direction are significantly smaller than a length of the plastic strip. In this way, a sieve mesh may be simply disposed based on a size difference, to screen and remove the first plastic block and second plastic block.

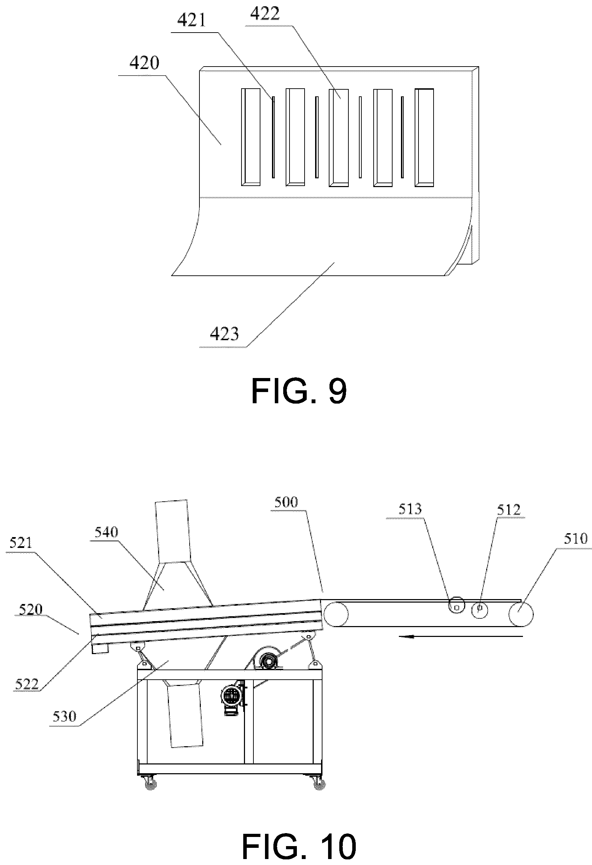

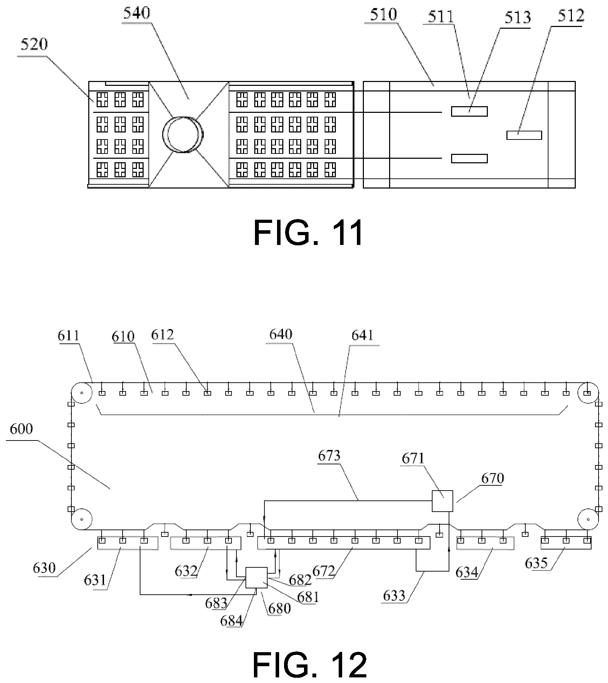

The screening device 500 includes a second conveying mechanism 510 and a first vibrating plate 520. A starting end of the second conveying mechanism 510 is located below the slitting device 400, and materials at a tail end of the second conveying mechanism 510 may fall into an input port of the first vibrating plate 520. The second conveying mechanism 510 includes a plurality of conveying units 511 arranged in parallel, each conveying unit 511 having a width dimension greater than the width dimension of the plastic strip but smaller than the length dimension of the plastic strip. An output port of the first vibrating plate 520 is communicated to an input end of the cleaning device 600, and a bottom of the first vibrating plate 520 is provided with a hollowed-out structure that allows the first plastic block and the second plastic block to fall, and a top thereof is provided with an exhaust device 540, as shown in FIG. 10 and FIG. 11.

The setting for adjusting the conveying belt is similar to the setting of the first conveying mechanism 100. Adjustment on the orientation of the plastic strips is implemented based on the dimensional design of the conveying unit 511 and the conveying unit group. Specifically, as shown in FIG. 10 and FIG. 11, two conveying units 511 form one conveying unit group, and the width of each conveying unit group is greater than twice the width of the plastic strip and smaller than the length of the plastic strip. A third eccentric wheel 512 is arranged between the adjacent conveying unit groups; a fourth eccentric wheel 513 is arranged between two conveying units (511) of each conveying unit group; and the fourth eccentric wheel 513 is located behind the third eccentric wheel 512 along a conveying direction. The principle of adjusting the directions of the conveying unit 511 and the conveying unit group is similar to that of the first conveying mechanism 100, and details are not described herein.

In addition, the first vibrating plate 520 of the embodiment is a double-layer stainless steel vibrating screen, and the first vibrating plate 520 is inclined downward along a moving direction of the plastic strips. The first vibrating plate includes a first vibrating screen 521 and a second vibrating screen 522 that are distributed up and down. The first vibrating screen 521 is located above the second vibrating screen 522, and a bottom of the first vibrating screen 521 is provided with a hole capable of accommodating part of falling waste materials. A bottom of the second vibrating screen 522 is provided with a collection tank that is used to collect the first plastic block and the second plastic block, as shown in FIG. 10. In the embodiment, a bottom of the second vibrating screen 522 is provided with a hole capable of accommodating the falling first plastic block and second plastic block. In this case, the hole at the bottom of the second vibrating screen 522 is staggered from the hole at the bottom of the first vibrating screen 521, to improve screening accuracy. To remove the label fragments, in the embodiment, a top of the first vibrating screen 521 is provided with an exhaust device 540, and a bottom of the second vibrating screen 522 is provided with an air blowing device 530. The exhaust device 540 matched with the air blowing device 530 to remove the label fragments. A collection device may be disposed, to collect the removed label fragments. The plastic strips from which the first plastic block, the second plastic block, and the label fragments are removed vibrate on the surfaces of the first vibrating screen 521 and slide across the screen surface, and then enter the next process. If any plastic strips fall from the first vibrating screen 521 into the second vibrating screen 522, the plastic strips also vibrate on the surfaces of the second vibrating screen 522 and slide across the screen surface, and then enter the next process.

The plastic strips from which the first plastic block, the second plastic block, and the label fragments are removed enter the cleaning device 600 for washing and preliminary dewatering. The plastic strips at an output end of the cleaning device 600 enter the drying device 700 for dewatering and drying.

The working process of the embodiment is as follows:
The waste plastic bottles are fed into the first conveying mechanism 100 via the feeding device for conveying. The width dimensions of each conveying unit 110 are designed to allow the waste plastic bottles to pass through only in a longitudinal direction or an inclined direction, thereby adjusting the orientations of the waste plastic bottles. This enables all plastic bottles to be in the first direction, providing conditions for subsequent slitting along the axial direction of the waste plastic bottles. The waste plastic bottles arranged in the first direction enter the stretching device 200, and the waste plastic bottles deformed caused by folding are unfolded and flattened under the stretching action of the stretching gap 210 of the stretching device 200. In addition, under the friction force generated by the contact between the bottle body and the stretching device 200, the label paper on the surfaces of the bottle bodies is pre-removed, and the dirt on the inner surfaces and the outer surfaces of the waste plastic bottles is also loosened to a specific extent. The waste plastic bottle bodies are further flattened through the feeding gap 330 that is smaller than the stretching gap 210, creating the cutting conditions for slitting. The peripheral surfaces of the driving roller 310 and the driven roller 320 are both provided with the concave holes 340 which are capable of accommodating the bottle caps and bottle necks, preventing the different materials of the bottle caps, the bottle collars, and the bottle bodies from affecting the extrusion effect on the bottle bodies. Because the waste plastic bottles enter the slitting device 400 longitudinally, and the slitting device 400 performs slitting along the axial direction of the waste plastic bottles, the bottle bodies are slit into the plastic strips, the bottle caps and the bottle collars are slit into the first plastic blocks and the second plastic blocks, and the label paper is also slit into the label fragments. The width dimension of each conveying unit 511 on the second conveying mechanism 510 is designed to allow the plastic strips to pass through only in a longitudinal direction or an inclined direction, thereby adjusting the direction of the plastic strips to the second direction, to enable the plastic strips to enter the cleaning device 600 in this orientation. The first vibrating plate 520 can use the different shapes of the plastic strips to screen and remove the first plastic blocks and the second plastic blocks, and use the exhaust device 540 to separate the label fragments through the property that the mass of the label fragments is significantly lower than the mass of the plastic strips, the first plastic blocks, and the second plastic blocks, thereby obtaining the plastic strips that are arranged longitudinally. The plastic strips that are arranged longitudinally are first cleaned in the cleaning device 600 and preliminarily dewatered after being cleaned, avoiding subsequent wet screening. The plastic strips that are cleaned and preliminarily dewatered are dewatered, to obtain clean and dry plastic strips. According to the composite treatment system of the present invention, bottle caps, bottle collars and bottle bodies are separated by the physical properties of bottle caps and bottle collars to obtain the bottle body plastic strips, so that a step of removing label stickiness by heating and boiling and a step of removing cap impurities by floating and filtering are omitted, reducing energy consumption and wastewater. Compared with the prior art that crushing is performed to obtain plastic sheets and then material screening is performed on the plastic sheets, causing high sorting difficulty and low sorting precision due to the small size of the plastic sheets, the present invention can achieve obtaining of high-purity bottle body plastic strips, thereby facilitating broadening the application range of recycled plastics.

### Embodiment 6

The embodiment is a second embodiment of a composite treatment process for waste plastic bottles. The embodiment is similar to Embodiment 5, but a difference between Embodiment 6 and Embodiment 5 lies in that:
The stretching device 200 includes a first driving stretching roller 220, a second driving stretching roller 230, a first driven stretching roller 240 and a second driven stretching roller 250, where both the first driving stretching roller 220 and the second driving stretching roller 230 are both connected to a driving mechanism. the first driving stretching roller 220 and the first driven stretching roller 240 are longitudinally arranged side by side, and the first driving stretching roller 220 and the first driven stretching roller 240 are connected by differential transmission, and the second driving stretching roller 230 and the second driven stretching roller 250 are longitudinally arranged side by side, and the second driving stretching roller 230 and the second driven stretching roller 250 are connected by differential transmission; the first driving stretching roller 220 and the second driven stretching roller 250 are laterally arranged side by side, and a stretching gap 210 is arranged between the first driving stretching roller 220 and the second driven stretching roller 250; the second driving stretching roller 230 and the first driven stretching roller 240 are laterally arranged side by side; and the stretching gap 210 is further arranged between the second driving stretching roller 230 and the first driven stretching roller 240, as shown in FIG. 6 The first driving stretching roller 220 and the second driving stretching roller 230 are cylindrical rollers each with a rough surface, and primarily contribute to friction on the surfaces of the bottle bodies. A rotation speed of the first driving stretching roller 220 is greater than a rotation speed of the first driven stretching roller 240, a rotation speed of the second driving stretching roller 230 is greater than a rotation speed of the second driven stretching roller 250. The first driving stretching roller 220 and the second driving stretching roller 230 are located on opposite diagonal sides respectively, and have a same rotation speed and an opposite rotation direction. The first driving stretching roller 220 and the second driving stretching roller 230 both rotate toward a direction of the stretching gap 210. The first driven stretching roller 240 and the second driven stretching roller 250 each are a quincunx-shaped roller of which surface is provided with a notch 260. A size of the notch 260 may accommodate the bottle caps, to avoid hard bottle caps affecting the friction effect and the stretching and flattening effect.

In the embodiment, the stretching device 200 includes two sets of differential stretching rollers. When the waste plastic bottles pass through a stretching gap 210 between the two sets of the differential stretching rollers, a friction force of a stretching roller with a fast speed on a surface of the waste plastic bottle is large. The high-speed rollers of the two sets of the differential stretching rollers respectively contact and rub two opposite surfaces of the target waste plastic bottles, to remove labels and loosen dirt on inner surfaces and outer surfaces. In addition, waste plastic bottles deformed caused by folding are stretched and reshaped. To enable the target waste plastic bottles to vertically enter the stretching gap 210 with the bottle cap facing down or the bottle bottom facing down. In the embodiment, a feeding hopper 270 may be directly disposed above the stretching gap 210. A diameter of the feeding hopper 270 is slightly larger than a width of the target waste plastic bottles, thereby restricting the orientation in which the target waste plastic bottles enter the feeding roller assembly 300.

A partition plate 800 is arranged between the stretching device 200 and the feeding roller assembly 300, a top of the partition plate 800 is provided with a first partition part 810 for shunting the target waste plastic bottles, and a bottom of the partition plate 800 is provided with a second partition part 820 for collecting the target waste plastic bottles; the first partition part 810 is located directly below the stretching gap 210; and the second partition part 820 is located directly above the feeding gap 330, as shown in FIG. 6. In the embodiment, the target waste plastic bottles that are stretched and flattened divert and move from two sides and then achieve two sides of the feeding roller assembly 300. The two sides of the feeding roller assembly 300 are places on which the pressure of the first partition part 810 is smallest places of the feeding roller assembly 300, and the target waste plastic bottles converge at the feeding gap 330 through the second partition part 820. The stretching gap 210 and the feeding gap 330 are both narrow gaps, preventing the target waste plastic bottles that are stretched and flattened from accumulating above the feeding roller assembly 300, so that the feeding effect and the feeding efficiency are not affected. A discharging hopper of the feeding roller assembly 300 is a place at which the pressure of the feeding roller assembly 300 is the greatest. When a rear target waste plastic bottle extrudes a front target waste plastic bottle, the target waste plastic bottle is forced to enter and pass through the slitting device 400 under an action of the pressure, where the front and the rear are relative to a moving direction of the target waste plastic bottle. To enable the target waste plastic bottles to enter the slitting device 400 vertically, in the embodiment, a blanking hopper 350 is disposed directly below the feeding gap 330. The blanking hopper 350 has a large opening and a small outlet. A maximum width of the outlet of the blanking hopper 350 is larger than a width of the bottle body and smaller than a height of the target waste plastic bottle.

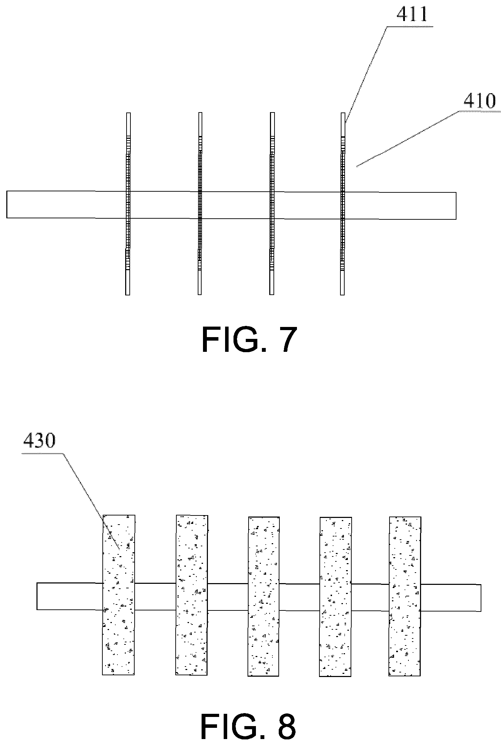

The slitting device 400 includes a rotary blade roller 410, a stationary blade plate 420 and elastic retaining wheels 430; the rotary blade roller 410 includes a plurality of cutting discs 411 that are uniformly and in parallel arranged and provided with rotary blade edges; the cutting discs 411, the elastic retaining wheels 430 and the rotary blade roller 410 are arranged laterally side by side, and the elastic retaining wheels 430 and the rotary blade roller 410 rotate oppositely at a same rotation speed, and the stationary blade plate 420 is provided with a first grid 421 and a second grid 422 that are alternately arranged; a stationary blade edge is formed at an edge of the first grid 421, which has a tiny gap with the rotary blade edge and is matched with the rotary blade edge to generate slit shear stress; and a plurality of sets of elastic retaining wheels 430 are capable of passing through the second grid 422 and extruded on a surface of the target waste plastic bottle in a multi-point contact way, as shown in FIG. 6 to FIG. 9 Spacing between adjacent cutting discs 411 is greater than half a diameter of the bottle cap and smaller than a diameter of the bottle cap, to ensure that each cutting disc 411 cuts both the bottle caps and the bottle collars, without any missing. In addition, the spacing between the adjacent cutting discs 411 is larger than 1/4 of a diameter of the target waste plastic bottle and smaller than 1/3 of the diameter of the target waste plastic bottle. In this case, four sets of the elastic retaining wheels 430 and four sets of cutting blades are sufficient to complete the slitting of the plastic bottle bodies. The spacing between cutting discs 411 may be designed based on shape dimensions of the waste plastic bottles and widths of the plastic strips. The spacing dimension is not limited in the present invention. To prevent waste plastic bottles that are not slit completely from escaping, and ensure that the waste plastic bottles are fully cut, in the embodiment, an arc-shaped supporting base 423 is disposed at the bottom of the stationary blade plate 420. A gap between one end of the arc-shaped supporting base 423 and the bottom of the stationary blade plate 420, and a gap between the other end of the arc-shaped supporting base 423 and a periphery of the rotary blade roller 410 increases gradually. The other end of the arc-shaped supporting base 423 extends almost directly below a center of the rotary blade roller 410.

During slitting, the elastic retaining wheels 430 apply a specific pressure on the bottle body under the support of an elastic force. Under the pressure, the target waste plastic bottles do not sway left and right during slitting. In addition, the pressure is applied on the bottle body, to generate a friction force. Under an action of the friction force, several elastic retaining wheels 430 and the rotary blade roller 410 rotate oppositely, to drive the target waste plastic bottle to slide downward uniformly. This avoids shaking, multi-slitting, or stagnation of slitting caused by the rotary blade edge of the rotary blade roller 410. A strong in-gap shearing force is formed between the rotary blade edge of the cutting discs 411 of the rotary blade roller 410 and the stationary blade edge of the stationary blade plate 420 in a vertically staggered manner. The target waste plastic bottles are sheared by means of the shearing force. The bottle bodies of the target waste plastic bottle are slit into plastic strips, bottle caps and bottle collars are slit into a first plastic block and a second plastic block, and label paper is sheared into label fragments.

It should be noted that, in the embodiment, the slitting device 400 is preferred to achieve the regular and stable slitting effect of the plastic strips, and should not be construed as a limitation to the present invention. A slitting manner in which the stationary blade roller and the rotary blade roller 410 rotate relative to each other, a slitting manner in which the rotary blade roller 410 and the stationary blade plate 420 rotate relative to each other, or other slitting manners are applicable to the present invention.

### Embodiment 7

The embodiment is a third embodiment of the composite treatment system for waste plastic bottles. The embodiment is similar to Embodiment 5 or Embodiment 6, but a difference between Embodiment 7 and Embodiment 5 or Embodiment 6 lies in that: the cleaning device 600 includes a conveying assembly 610 provided with a plurality of cleaning frames 612, a cleaning assembly 630 and a dripping assembly 640; a top of the cleaning frame 612 is provided with a plurality of openings used for receiving the plastic strips; the cleaning frame 612 receives the plastic strips from a first vibrating screening assembly 500, and the plastic strips are sequentially conveyed to the cleaning assembly 630 for cleaning and the dripping assembly 640 under the action of the conveying assembly 610; and the cleaned and dripped plastic strips in the cleaning frame 612 are conveyed to the drying device 700, as shown in FIG. 12.

The conveying assembly 610 includes a conveying chain 611 and a cleaning frame 612. The conveying chain 611 is used to convey the cleaning frame 612. The conveying chain 611 is a relatively mature technology in the conveying field, and in the embodiment, the driving manner of the conveying chain 611 is not changed. Instead, in the embodiment, only a layout of the conveying chain 611 is modified. Specifically: In the embodiment, the conveying chain 611 is spatially arranged up and down to form a square-shaped conveying loop. An upper horizontal section is referred to as a second path, and preliminary drying is performed on the second path. A lower horizontal section is referred to as a first path, and the cleaning process is performed on the first path. In the embodiment, the conveying assembly 610 adopts a stepwise conveying manner. Each driven conveying distance is spacing between two adjacent cleaning frames 612. That is, during driving each time, a cleaning frame 612 at a previous position moves to a cleaning frame 612 at a next position. In addition, in the embodiment, the conveying assembly 610 may further drive the cleaning frame 612 to move up and down. When the cleaning frame 612 needs to be cleaned in the cleaning tank, the conveying chain 611 drives the cleaning frame 612 to descend. When the cleaning frame 612 needs to exit the cleaning tank, the conveying chain 611 drives the cleaning frame 612 to ascend. An ascending distance and a descending distance of the cleaning frame 612, and a travel distance of the cleaning frame 612 at a specific height may be achieved by designing a control program for the conveying chain 611. This conveying control manner is also a common conveying manner in the conveying field. Details of the specific structure of the conveying chain 611 are not described in the embodiment. A feeding station at which the plastic strips are added to the cleaning frame 612 and a discharging station at which the plastic strips in the cleaning frame 612 are discharged are both located beside a left conveying chain, and the discharging station is located above the feeding station, so that empty cleaning frames 612 can be timely conveyed to the feeding station for feeding.

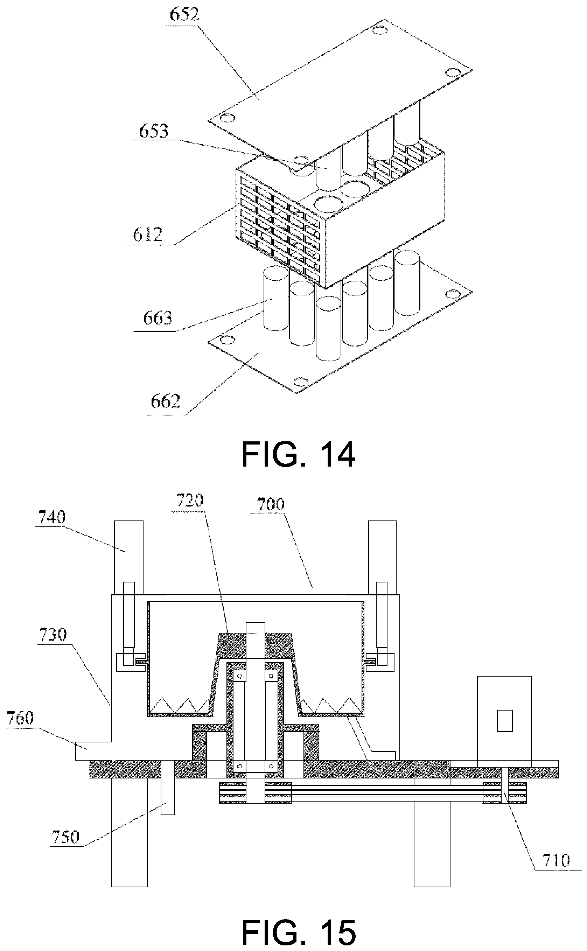

In the embodiment, the cleaning frame 612 is designed as a cube structure with a top opening. A movement direction of the cleaning frame 612 on the first path is referred to as the right. The front surface, the back surface, the bottom surface of the cleaning frame 612 are grid plates, and the left surface and the right surface of the cleaning frame 612 are solid side plates. The top opening of the cleaning frame 612 is used for plastic strips that are vibrated and sorted by the first vibrating plate 520 to slide into the cleaning frame 612. A length direction of the plastic strips is consistent with the moving direction of the cleaning frame 612. Because the left surface and the right surface of the cleaning frame 612 are solid side panels, the plastic strips do not slip out of the cleaning frame 612, as shown in FIG. 14. Because density of the plastic strips is larger than density of water and the cleaning solution in each cleaning tank, the plastic strips do not float after entering the cleaning frame 612, but may move along with the cleaning frame 612. The front surface and the back surface of the cleaning frame 612 are grid plates. Due to the grid plates, bubbles generated by ultrasonic waves or compressed air may enter the cleaning frame 612, to create cavitation on the surfaces of the plastic strips or between the surfaces of the plastic strips, and abrasives may flow out of the cleaning frame 612. The bottom surface of the cleaning frame 612 is a perforated plate, and the perforated plate may allow the second impact column 663 to pass through and strike the plastic strips. In the embodiment, duration of each vibration of the first vibrating plate 520 and a time interval between two vibrations can be controlled, to control an approximate quantity and an approximate weight of plastic strips vibrating and sliding into the cleaning frame 612 each time. In the embodiment, the outlet of the first vibrating plate 520 may also be extended, to facilitate the addition of the plastic strips.

The cleaning assembly 630 includes a rough washing tank 631, a first composite washing tank 632, a second composite washing tank 633, a washing tank 634 and a clean water tank 635 that are sequentially arranged; the first composite washing tank 632 and the second composite washing tank 633 are internally provided with a first impact column 653 and a second impact column 663 that are respectively located above and below the cleaning frame (612); the first impact column 653 and the second impact column 663 are respectively connected to a first driving element 651 and a second driving element 661; both a top and a bottom of the cleaning frame 612 are provided with channels for accommodating the first impact column 653 and the second impact column 663 to enter and impact the plastic strips; an ultrasonic cleaner is further provided in the first composite washing tank 632; and the second composite washing tank 633 is further connected to an abrasive supply device 670 that is capable of conveying abrasives into the cleaning frame 612, as shown in FIG. 12. Certainly, the setting of the washing tanks is not limited to the foregoing five cleaning tanks. A quantity and type of the washing tanks may be adjusted based on an object to be washed. In the embodiment, the rough washing tank 631, the first composite washing tank 632, the second composite washing tank 633, the washing tank 634, and the clean water tank 635 are used as examples for the following description.

Rough washing tank 631: used for soaking and rough washing. A structure of the rough washing tank 631 has no special structural design.

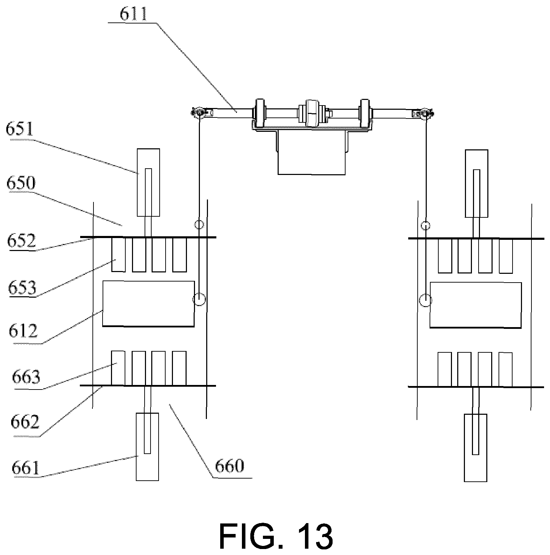

First composite washing tank 632: An ultrasonic cleaner is disposed at a bottom or in an inner wall of the first composite washing tank 632. The ultrasonic cleaner generates bubbles and vibrations. The vibrations can loosen the dirt on the surfaces of the plastic strips. The bubbles move upward and enter the cleaning frame through the grid plates on the front surface and the back surface of the cleaning frame 612. The airflow may carry away impurities washed out between the plastic strips. A first impact assembly 650 and a second impact assembly 660 are disposed in the first composite washing tank 632. The first impact assembly 650 includes a first driving element 651, a first mounting plate 652, and a plurality of first impact columns 653. The first mounting plate 652 is connected to an output end of the first driving element 651, and the plurality of first impact columns 653 are uniformly distributed and mounted on the first mounting plate 652. The second impact assembly 660 includes a second driving element 661, a second mounting plate 662, and a plurality of second impact columns 663. The second mounting plate 662 is connected to an output end of the second driving element 661, and the plurality of second impact columns 663 are uniformly distributed and mounted on the second mounting plate 662. In an initial state, a distance between end parts of the first impact columns 653 and the second impact columns 663 is greater than a height of the cleaning frame 612, to enable the cleaning frame 612 to pass between the first impact columns 653 and the second impact columns 663, as shown in FIG. 13. When the cleaning frame 612 moves below the first impact columns 653 and moves above the second impact columns 663, the first driving element 651 and the second driving element 661 move to drive the first impact column 653 and the second impact column 663 to collide with the plastic strips, to loosen the dirt on the inner surfaces and the outer surfaces of the plastic strips. In the embodiment, different impact forms can be implemented by setting positions of the first impact column 653 and the second impact column 663: When axes of the first impact column 653 and the second impact column 663 are co-linear, travel limits of the first driving element 651 and the second driving element 661 are that a distance between a bottom of the first impact column 653 and a top of the second impact column 663 is zero. In this case, the first impact column 653 and the second impact column 663 respectively impact against upper surfaces and lower surfaces of the plastic strips at a same position. When axes of the first impact column 653 and the second impact column 663 are not co-linear and are staggered, travel limits of the first driving element 651 and the second driving element 661 are that a distance between the first impact column 653 and the second impact column 663 is negative. The distance being negative means that a vertical height of the top of the second impact column 663 is higher than the bottom of the first impact column 653 in this state. In this case, upper impact positions and lower impact positions of the first impact column 653 and the second impact column 663 are staggered, causing the twist and bending of the plastic strips, thereby enabling the dirt adhering to the plastic products to loosen. In the embodiment, the first driving element 651 and the second driving element 661 may be driven by cylinders. Compressed air discharged when the cylinders operate is discharged from the lower side of the cleaning frame 612, to form air bubbles. The air bubbles move upward and enter the cleaning frame through the grid plates on the front surface and the back surface of the cleaning frame 612. The airflow can carry away the impurities cleaned out between the plastic strips.

Second composite washing tank 633: The cleaning solution in the second composite washing tank 633 is hot alkali. The first impact assembly 650 and second impact assembly 660 of which structures are the same as the inner structure of the first composite washing tank 632 are disposed in the second composite washing tank 633. An abrasive supply device 670 is further disposed in the second composite washing tank 633. An outlet of the abrasive supply device 670 is located directly above a position at which the cleaning frame 612 stays in the second composite washing tank 633 and located above the first impact assembly 650 or in front of the first impact assembly 650, to ensure that abrasives are filled in the cleaning frame 612 when the first impact assembly 650 and the second impact assembly 660 operate. The abrasive is a granular structure with a diameter of 3 mm to 8 mm, a material of the abrasive may be stainless steel, aluminum alloy, filled modified plastic, and the like. The abrasive is sandy, and specific gravity of the abrasive is greater than that of water. The abrasive is added from above the cleaning frame 612 and stays in space between an upper layer of the plastic strip and the plastic strip. The first impact assembly 650 and the second impact assembly 660 collide with the plastic strips up and down. During the continuous collision, the plastic strips are twisted and move, and the space between the plastic strips continuously changes. Effective friction is continuously generated between the abrasive and the surface of the plastic strip. High-concentration abrasives also continuously flow from top to bottom and two sides in space of the cleaning frame 612, to enable the abrasive to flow, which is similar to river water carrying a large amount of sand and silt, thereby covering the space in the cleaning frame 612. The high-concentration abrasives rub a large area of the surfaces of the plastic strips, to continuously flow, strip and remove dirt from the surfaces of the flexible plastic strips, thereby updating, continuously rubbing and cleaning the surfaces of the plastic strips. Under the synergistic effect of the chemical cleaning of hot alkali on the stubborn dirt on the surfaces of the plastic strips, the stubborn dirt and ink can be removed in a short time.

Washing tank 634: The washing tank 634 is a room-temperature tank. The cleaning solution used in the washing tank 634 may be water, a weak acidic cleaning solution, or other cleaning solutions that reduce the concentration of alkali/chemicals. Due to the washing tank 634, the concentration of alkali/chemicals can be reduced, and a small amount of abrasives carried by the plastic strips can be washed out and separated.

Clean water tank 635: The clean water tank 635 is a room-temperature tank. The cleaning solution used in the clean water tank 635 is water. Due to the clean water tank 635, the alkali/chemical residues on the surfaces of the plastic strips meet requirements, without visible abrasive residues. A small amount of abrasives that may be residual after cleaning may be removed completely in the drying device 700 by intermittent water spraying and high-speed rotation.

In the embodiment, water is replenished into the rough washing tank 631, the first composite washing tank 632, the second composite washing tank 633, the washing tank 634, and the clean water tank 635 in a stepwise water replenishment method. That is, clean water is replenished into the clean water tank 635, the water in the clean water tank 635 flows into the washing tank 634, the cleaning solution in the washing tank 634 flows into the second composite washing tank 633, the cleaning solution in the second composite washing tank 633 flows into the first composite washing tank 632, and the cleaning solution in the first composite washing tank 632 flows into the rough washing tank 631. The concentration of the cleaning solution in the rough washing tank 631 is the highest, and the cleaning solution therein is discharged as wastewater. In this water replenishment method, energy consumption can be reduced, and the discharge of the wastewater can be reduced.

In the embodiment, the abrasive in the second composite washing tank 633 may be recycled. Specifically: The abrasive supply device 670 includes a power unit 671, a water inlet pipe 672, and a water outlet pipe 673. The water inlet pipe 672 and the water outlet pipe 673 are connected to the power unit 671, the water inlet pipe 672 is connected to a bottom of the second composite washing tank 633, and the water outlet pipe 673 is located above the cleaning frame 612. Excessive abrasives are continuously added, and flow into a concave bottom of the second composite washing tank 633 through the bottom surface, the left surface, and the right surface of the cleaning frame 612. The abrasive is pumped above the cleaning frame 612 by the power unit 671 for circulation, as shown in FIG. 12.

In addition, a water circulation device 680 is further disposed in the embodiment. The water circulation device 680 includes a membrane filter 681. A water inlet 682 of the membrane filter 681 is communicated to the first composite washing tank 632 and the second composite washing tank 633. A clear liquid outlet 683 of the membrane filter 681 is communicated to the first composite washing tank 632 and the second composite washing tank 633, and a turbid liquid outlet 684 of the membrane filter 681 is communicated to the rough washing tank 631. Wastewater formed in the rough washing tank 631 is discharged, as shown in FIG. 12.

The dripping assembly 640 includes a water-containing plate 641 that is located at the bottom of the cleaning frame 612 on the second path. Moisture on the surfaces of the plastic strips flows from the bottom surface, the left surface, and the right surface of the cleaning frame 612 into the water-containing plate 641, to implement preliminary dewatering.

### Embodiment 8

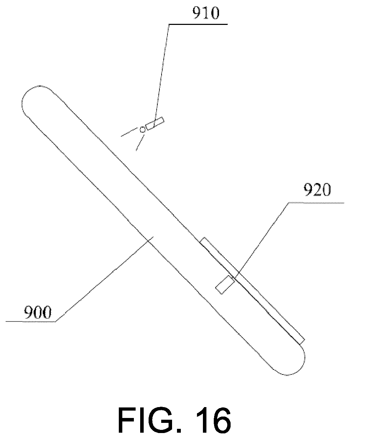

The embodiment is a fourth embodiment of the composite treatment system for waste plastic bottles. The embodiment is similar to any of Embodiment 5 to Embodiment 7, but a difference between the embodiment and any of Embodiment 5 to Embodiment 7 lies in that: the drying device 700 is provided with a discharge port 760, and a third conveying mechanism 900 for conveying bottle body plastic strips to a packaging process is arranged at the discharge port 760, and a near infrared detector 910 is arranged above the third conveying mechanism 900; the third conveying mechanism 900 is provided with a blanking port; a sliding plate mechanism 920 is arranged at the blanking port; and the near infrared detector 910 and the sliding plate mechanism 920 are both connected to the controller, as shown in FIG. 16.

The drying device 700 is provided with an opening at a top or a cover that may be opened and closed. The cleaning frame 612 that is dried preliminarily is flipped around a bearing, and the plastic strips in the cleaning frame 612 are poured into the drying device or a slide, and then slide into the drying device 700. The rotatable connection between the cleaning frame 612 and the conveying chain is a mature and conventional configuration in the conveying field, and details are not described in the embodiment.

As shown in FIG. 15, the drying device 700 includes a centrifugal driving mechanism 710, an inner screen 720, an outer shell 730, and a lifting cylinder 740. The inner screen 720 is connected to an output end of the centrifugal driving mechanism 710. A cavity is formed between the inner screen 720 and the outer shell 730, and the cavity is connected to a water draining port 750 and a discharge port 760. The inner screen 720 is connected to an output end of the lifting cylinder 740 via a ring-shaped groove and a ring-shaped protrusion, to enable the lifting movement of the inner screen 720 not to affect the inner screen 720 to rotate around an axis of the inner screen 720. When the lifting cylinder 740 drives the inner screen 720 to descend until the inner screen 720 is connected to the output end of the centrifugal driving mechanism 710, the inner screen 720 rotates at a high speed, to implement dewatering of the plastic strips. During dewatering, a small amount of abrasives left in the plastic strips are rapidly removed through the inner screen. To ensure that the abrasive can be removed completely, after dewatering, the plastic strips can be intermittently sprayed with water again, and then continuously dewatered at a high speed. Under the action of a centrifugal force, water droplets are interacted with the plastic strips, to enable previous abrasives in dead corners to be completely removed. When the lifting cylinder 740 drives the inner screen 720 to ascend until the inner screen 720 is disengaged from the output end of the centrifugal driving mechanism 710, the rotation speed of the inner screen 720 gradually decreases. In this case, the water draining port 750 may be opened for drainage, and the discharge port 760 may be opened for discharge. Under the action of the centrifugal force, clean and dry plastic strips are ejected from the discharge port 760. The plastic strips are ejected from the discharge port 760 to a third conveying mechanism 900. The third conveying mechanism 900 may be set as a stainless steel slide that is inclined from a high position to a low position. The near infrared detector 910 is disposed above the slide, and the slide is provided with an opening. The sliding plate mechanism 920 is disposed at the opening. The sliding plate mechanism 920 includes a drive mechanism and a baffle plate. The drive mechanism may drive the baffle plate to slide or rotate, to open and close the opening.

Because the plastic strips may be transparent plastic strips that are made of different materials and that have a same appearance, for example, PET plastic strips may be mixed with transparent PMMA, PC, and other plastic strips. Although the content of such impurities is low, such impurities have a significant impact on the quality of PET. Therefore, in the embodiment, the near infrared detector 910 is disposed to identify the material of the plastic strips of the bottle bodies, to obtain the target plastic strips and the non-target plastic strips. The target plastic strips enter the packaging process. When the non-target plastic strips pass through the opening, the drive assembly is controlled to move, to open the opening, thereby screening and collecting the non-target plastic strips. The plastic strip products of which materials are further screened have higher purity, and have significantly higher economic value.

In specific content of the foregoing specific embodiments, the technical features can be employed in arbitrary reconcilable combinations. To provide a concise description of these embodiments, all possible combinations of all the technical features may not be described; however, these combinations of the technical features should be construed as falling within the scope defined by the specification as long as no contradiction occurs.

It is apparent that the above embodiments are merely intended to describe the present invention clearly, instead of limitting the implementations of the present invention. The person of ordinary skill in the art may make modifications or variations in other forms based on the above description. There are no need and no way to exhaust all the embodiments. Any modification, equivalent substitution and improvement made within the spirit and principle of the present invention should fall within the protection scope of the claims of the present invention.

## Claims

1. A composite treatment process for waste plastic bottles, **characterized by** comprising the following steps:
S10, providing the waste plastic bottles; conveying the waste plastic bottles through a first conveying mechanism (100); adjusting an axial direction of the waste plastic bottles to a first direction, wherein the first direction is substantially the same as a conveying direction of the first conveying mechanism (100); and identifying and sorting the direction-adjusted waste plastic bottles upon direction adjustment to obtain target waste plastic bottles;
S20, conveying the target waste plastic bottles to a stretching device (200); and performing first flattening and stretching on the bottle bodies of the target waste plastic bottles through a stretching gap (210) of the stretching device (200);
S30, conveying the target waste plastic bottles stretched and flattened to a feeding roller assembly (300), wherein a periphery of the feeding roller assembly (300) is provided with a plurality of concave holes (340) through which bottle caps pass; performing second flattening on the bottle bodies of the target waste plastic bottles by a feeding gap (330) of the feeding roller assembly (300); allowing the bottle caps of the target waste plastic bottles to pass through the concave holes (340) of the feeding roller assembly (300); conveying the target waste plastic bottles to a slitting device (400) by the feeding roller assembly (300) for slitting; and slitting the bottle bodies of the waste plastic bottles into plastic strips and remaining parts of the waste plastic bottles into waste materials, wherein a length dimension of the plastic strip is greater than a width dimension of the waste material in any direction, and/or the weight of the plastic strip is greater than the weight of the waste material; and the feeding gap (330) is smaller than the stretching gap (210);
S40, conveying the plastic strips and the waste materials obtained in Step S30 to a screening device (500), and removing the waste materials by the screening device (500) to obtain the plastic strips;
S50, conveying the plastic strips obtained through screening in Step S40 to a cleaning device (600) for cleaning; and
S60, conveying the plastic strips cleaned in Step S50 to a drying device (700) for drying to obtain bottle body plastic strips.

2. The composite treatment process for waste plastic bottles according to claim 1, **characterized in that** in Step S10, the identifying and sorting the waste plastic bottles upon direction adjustment to obtain target waste plastic bottles comprises a first identification step, a second identification step, and a sorting step:
the first identification step: performing metal detection on the waste plastic bottles to obtain metal-containing objects and plastic objects;
the second identification step: identifying external labels and appearance features of the plastic objects to obtain the target waste plastic bottles and non-target waste plastic bottles; and
the sorting step: sorting and removing the metal-containing objects and the non-target waste plastic bottles to obtain the target waste plastic bottles.

3. The composite treatment process for waste plastic bottles according to claim 1, **characterized in that** the stretching device (200) comprises two sets of stretching rollers; and in Step S20, the performing first flattening and stretching on bottle bodies of the target waste plastic bottles through a stretching gap (210) of the stretching device (200) comprises:
controlling the two sets of stretching rollers in the stretching device (200) to contact two opposite sides of the target waste plastic bottles respectively to generate a first friction force and a second friction force respectively; and
controlling the first friction force and the second friction force to be unequal in magnitude, so that the two sets of stretching rollers perform first flattening and stretching on the bottle bodies of the target waste plastic bottles.

4. The composite treatment process for waste plastic bottles according to claim 1, **characterized in that**
in Step S30, the conveying the target waste plastic bottles stretched and flattened to a feeding roller assembly (300) comprises:
firstly, guiding and conveying the target waste plastic bottles stretched and flattened to both sides of the feeding roller assembly (300); and
secondly, moving the target waste plastic bottles stretched and flattened from the both sides of the feeding roller assembly (300) to the middle of the feeding roller assembly (300) under an action of the feeding roller assembly (300).

5. The composite treatment process for waste plastic bottles according to claim 1, **characterized in that**
the remaining parts of the waste plastic bottle comprise a bottle cap, a bottle collar, and label paper, wherein the bottle cap is connected to the bottle body, the bottle collar is sleeved at the bottleneck position of the bottle body, and the label paper is arranged at a periphery of the bottle body; and
in Step S30, the slitting the bottle bodies of the waste plastic bottles into plastic strips and the remaining parts of the waste plastic bottles into waste materials by a slitting device (400) comprises:
slitting the bottle bodies of the waste plastic bottles into the plastic strips;
slitting the bottle caps of the waste plastic bottles to obtain a first plastic block;
slitting the bottle collars of the waste plastic bottles to obtain a second plastic block; and
shearing the label paper to obtain label fragments;
wherein the length dimension of the plastic strip is greater than a width dimension of the first plastic block in any direction and a width dimension of the second plastic block in any direction, and weights of the plastic strip, the first plastic block and the second plastic block are respectively greater than the weight of the label fragments.

6. The composite treatment process for waste plastic bottles according to claim 5, **characterized in that** Step S40 is performed according to the following steps:
conveying the plastic strip, the first plastic block, the second plastic block and the label fragments by a second conveying mechanism (510), and adjusting an axial direction of the plastic strip to a second direction in a conveying process, and allowing the plastic strip, the first plastic block, the second plastic block and the label fragments to be conveyed to the screening device (500) along the second direction, wherein the second direction is substantially the same as a conveying direction of the second conveying mechanism (510);
sorting, by the screening device (500), the first plastic block and the second plastic block by falling and the label fragments by upward suction to obtain the plastic strip; and allowing the plastic strip to be conveyed out of the screening device (500) along the second direction; and
in Step S50, conveying the plastic strip to the cleaning device (600) along the second direction.

7. The composite treatment process for waste plastic bottles according to claim 1, **characterized in that** after the step of cleaning the plastic strips, Step S50 further comprises performing preliminarily drying on the plastic strips.

8. The composite treatment process for waste plastic bottles according to claim 7, **characterized in that** the step of cleaning the plastic strips comprises the following steps:
S51, performing first cleaning on the plastic strips by immersing the plastic strips in a cleaning solution;
S52, performing second cleaning on the plastic strips by using a cleaning mode combining ultrasonic cleaning and mechanical vibration cleaning;
S53, performing third cleaning on the plastic strips by using a combination mode of hot alkali treatment, abrasive circulation and mechanical vibration, wherein a temperature of hot alkali is 55°C-80°C; and
S54, performing fourth cleaning on the plastic strips with the cleaning solution or clean water.

9. The composite treatment process for waste plastic bottles according to any one of claims 1 to 8, **characterized in that** after Step S60, the process further comprises:
conveying the bottle body plastic strips through a third conveying mechanism and identifying the bottle body plastic strips to obtain target plastic strips and non-target plastic strips; and
conveying the target plastic strips to a packaging process, and screening and collecting the non-target plastic strips.

10. A composite treatment system for waste plastic bottles, **characterized by** comprising a feeding device, a first conveying mechanism (100), a stretching device (200), a feeding roller assembly (300), a slitting device (400), a screening device (500), a cleaning device (600), and a drying device (700),
wherein the feeding device is located above a starting end of the first conveying mechanism (100), and the first conveying mechanism (100) comprises a plurality of conveying units (110) arranged in parallel; a width dimension of each conveying unit (110) is greater than a width dimension of the waste plastic bottle and smaller than a height dimension of the waste plastic bottle; the stretching device (200) is located below a tail end of the first conveying mechanism (100);
the stretching device (200) comprises stretching roller assemblies rotating in opposite directions, and each of the stretching roller assemblies is provided with a stretching gap (210) for allowing a target waste plastic bottle to pass through and stretching and flattening the target waste plastic bottle;
the feeding roller assembly (300) is located below the stretching device (200) and comprises a driving roller (310) and a driven roller (320) that rotate in opposite directions, wherein a minimum distance between the driving roller (310) and the driven roller (320) is a feeding gap (330), and the feeding gap (330) is smaller than the stretching gap (210); peripheral surfaces of the driving roller (310) and the driven roller (320) are both provided with concave holes (340) which are capable of accommodating bottle caps and bottle necks; in a feeding process, the bottle caps and the bottle necks of the waste plastic bottles are located in the concave holes (340), and the bottle bodies are flattened again through the feeding gap (330);
the slitting device (400) is located below the feeding roller assembly (300) and comprises several sets of cutter assemblies which are capable of rotating in opposite directions to generate a shearing force; the bottle bodies of the target waste plastic bottles are slit into plastic strips by the shearing force, and the bottle caps, the bottle collars and label paper are also chopped to obtain waste materials;
the screening device (500) comprises a first vibrating plate (520), a starting end of the first vibrating plate (520) is located below the slitting device (400), an output port of the first vibrating plate (520) is communicated to an input end of the cleaning device (600), and a bottom of the first vibrating plate (520) is provided with a hollowed-out structure that allows some waste materials to fall, and a top thereof is provided with an exhaust device (540) for suction and sorting of some waste materials; and
plastic strips at an output end of the cleaning device (600) enter the drying device (700) for dewatering and drying.

11. The composite treatment system for waste plastic bottles according to claim 10, **characterized in that** two of the conveying units (110) form a conveying unit group, and a first eccentric wheel (120) is arranged between the adjacent conveying unit groups; a second eccentric wheel (130) is arranged between the two conveying units (110) of each conveying unit group; a width of each conveying unit group is greater than twice the width of the waste plastic bottles and smaller than a height of the waste plastic bottles; and the second eccentric wheel (130) is located behind the first eccentric wheel (120) along a conveying direction.

12. The composite treatment system for waste plastic bottles according to claim 10, **characterized in that** a metal detector (140) and a visual detector (150) are arranged above each conveying unit (110); each conveying unit (110) is connected to a sliding plate blanking assembly (160); and the metal detector (140), the visual detector (150) and the sliding plate blanking assembly (160) are all connected to a controller.

13. The composite treatment system for waste plastic bottles according to claim 10, **characterized in that** the stretching device (200) comprises a first driving stretching roller (220), a second driving stretching roller (230), a first driven stretching roller (240), and a second driven stretching roller (250); the first driving stretching roller (220) and the first driven stretching roller (240) are longitudinally arranged side by side, and the first driving stretching roller (220) and the first driven stretching roller (240) are connected by differential transmission, and the second driving stretching roller (230) and the second driven stretching roller (250) are longitudinally arranged side by side, and the second driving stretching roller (230) and the second driven stretching roller (250) are connected by differential transmission; the first driving stretching roller (220) and the second driven stretching roller (250) are laterally arranged side by side, and a stretching gap (210) is arranged between the first driving stretching roller (220) and the second driven stretching roller (250); the second driving stretching roller (230) and the first driven stretching roller (240) are laterally arranged side by side; and a stretching gap (210) is further arranged between the second driving stretching roller (230) and the first driven stretching roller (240).

14. The composite treatment system for waste plastic bottles according to claim 10, **characterized in that** a partition plate (800) is arranged between the stretching device (200) and the feeding roller assembly (300), a top of the partition plate (800) is provided with a first partition part (810) for shunting the target waste plastic bottles, and a bottom of the partition plate (800) is provided with a second partition part (820) for collecting the target waste plastic bottles; the first partition part (810) is located directly below the stretching gap (210); and the second partition part (820) is located directly above the feeding gap (330).

15. The composite treatment system for waste plastic bottles according to claim 10, **characterized in that** the slitting device (400) comprises a rotary blade roller (410), a stationary blade plate (420), and elastic retaining wheels (430); the rotary blade roller (410) comprises a plurality of cutting discs (411) that are uniformly and in parallel arranged and provided with rotary blade edges; the cutting discs (411), the elastic retaining wheel (430) and the rotary blade roller (410) are arranged laterally side by side, and the elastic retaining wheel (430) and the rotary blade roller (410) rotate oppositely at a same rotation speed, and the stationary blade plate (420) is provided with a first grid (421) and a second grid (422) that are alternately arranged; an inner edge of the first grid (421) is provided with a stationary blade edge matched with the rotary blade edge to generate slit shear stress; and a plurality of sets of elastic retaining wheels (430) are capable of passing through the second grid (422) and extruded on a surface of the target waste plastic bottle in a multi-point contact way.

16. The composite treatment system for waste plastic bottles according to claim 15, **characterized in that** a spacing between the adjacent cutting discs (411) is greater than half a diameter of the bottle cap and smaller than the diameter of the bottle cap; and a spacing between the adjacent cutting discs (411) is greater than 1/4 of a bottle width of the target waste plastic bottle and smaller than 1/3 of the bottle width of the target waste plastic bottle.

17. The composite treatment system for waste plastic bottles according to claim 10, **characterized in that** the screening device (500) further comprises a second conveying mechanism (510), a starting end of the second conveying mechanism (510) is located below the slitting device (400), and materials at a tail end of the second conveying mechanism (510) are capable of falling into an input port of a first vibrating plate (520); the second conveying mechanism (510) comprises a plurality of conveying units (511) arranged in parallel, and the width dimension of each conveying unit (511) is greater than a width dimension of the plastic strip and smaller than a length dimension of the plastic strip; two of the conveying units (511) form a conveying unit group, and the width of each conveying unit group is greater than twice the width of the plastic strip and smaller than the length of the plastic strip; a third eccentric wheel (512) is arranged between the adjacent conveying unit groups; a fourth eccentric wheel (513) is arranged between two conveying units (511) of each conveying unit group; and the fourth eccentric wheel (513) is located behind the third eccentric wheel (512) along a conveying direction.

18. The composite treatment system for waste plastic bottles according to claim 10, **characterized in that** the first vibrating plate (520) comprises a first vibrating screen (521) and a second vibrating screen (522) that are distributed up and down, the first vibrating screen (521) is located above the second vibrating screen (522), and a bottom of the first vibrating screen (521) is provided with a hole capable of accommodating part of falling waste materials; a top of the first vibrating screen (521) is provided with an exhaust device (540), and a bottom of the second vibrating screen (522) is provided with an air blowing device (530); and the exhaust device (540) matched with the air blowing device (530) to remove remaining waste materials that fail to fall from the hole.

19. The composite treatment system for waste plastic bottles according to claim 10, **characterized in that** the cleaning device (600) comprises a conveying assembly (610) provided with a plurality of cleaning frames (612), a cleaning assembly (630), and a dripping assembly (640); the cleaning frame (612), which is provided with an opening at a top, is used for receiving the plastic strips from a first vibrating screening assembly (500); the plastic strips are sequentially conveyed to the cleaning assembly (630) for cleaning and the dripping assembly (640) for preliminary drying under an action of the conveying assembly (610); and the cleaned and preliminarily dried plastic strips in the cleaning frame (612) are conveyed to the drying device (700).

20. The composite treatment system for waste plastic bottles according to claim 19, **characterized in that** the cleaning assembly (630) comprises a rough washing tank (631), a first composite washing tank (632), a second composite washing tank (633), a washing tank (634), and a clean water tank (635) that are sequentially arranged; both the first composite washing tank (632) and the second composite washing tank (633) are internally provided with a first impact column (653) and a second impact column (663) that are respectively located above and below the cleaning frame (612); the first impact column (653) and the second impact column (663) are respectively connected to a first driving element (651) and a second driving element (661); both a top and a bottom of the cleaning frame (612) are provided with channels for accommodating the first impact column (653) and the second impact column (663) to enter and impact the plastic strips; an ultrasonic cleaner is further provided in the first composite washing tank (632); and the second composite washing tank (633) is further connected to an abrasive supply device (670) that is capable of conveying abrasives into the cleaning frame (612).

21. The composite treatment system for waste plastic bottles according to any one of claims 10 to 20, **characterized in that** the drying device (700) is provided with a discharge port (760), and a third conveying mechanism (900) for conveying bottle body plastic strips to a packaging process is arranged at the discharge port (760), and a near infrared detector (910) is arranged above the third conveying mechanism (900); the third conveying mechanism (900) is provided with a blanking port; a sliding plate mechanism (920) is arranged at the blanking port; and the near infrared detector (910) and the sliding plate mechanism (920) are both connected to a controller.
